# EUROPÄISCHE PATENTANMELDUNG

(11) **EP 4 528 148 A1**
(43) Veröffentlichungstag der Anmeldung: **26.03.2025**
(21) Anmeldenummer: 24201412.4
(22) Anmeldetag: 19.09.2024
(51) Int. Cl.: F21S 8/08, F21V 3/02, F21V 5/00, F21V 8/00, F21Y 105/18, F21Y 115/10

(54) **LEUCHTE MIT LICHTLEITERUNTERSTÜTZTER LICHTABGABE**

(30) Priorität: 19.09.2023 DE 102023125400
(71) Anmelder: Trilux GmbH & Co. KG, 59759 Arnsberg (DE)
(72) Erfinder: SELTMANN, Stefan, 58802 Balve (DE); GRÜNWALD, Björn, 59757 Arnsberg (DE); BOSSY, Rino, 42489 Wülfrath (DE); KREMER, Thomas, 57392 Schmallenberg (DE)
(74) Vertreter: Lippert Stachow Patentanwälte Rechtsanwälte

(57) **Zusammenfassung**

Die Erfindung betrifft eine Leuchte 1 umfassend mehrere in einem Betriebszustand der Leuchte 1 zum Emittieren von Licht ausgebildete Lichtquellen und eine lichtdurchlässige Abdeckung 4, die mit ihrer Innenseite einen Innenraum der Leuchte 1 begrenzt und deren Außenseite zum Abstrahlen des von den Lichtquellen emittierten Lichts in eine Umgebung der Leuchte 1 ausgebildet ist, wobei zumindest einige der Lichtquellen einer Gruppe an Lichtquellen angehören, denen jeweils ein Optikelement 9 zugeordnet ist, durch das eine Lichtverteilung vorgegeben ist, mit der das von der dem jeweiligen Optikelement 9 zugeordneten Lichtquelle emittierte Licht von dem Optikelement 9 weg zur Abdeckung 4 hin propagiert. Die Leuchte 1 umfasst einen flächigen Lichtleiter 7, 700, dessen Lichtleitkörper durch zwei flächige Außenseiten und durch die Außenseiten verbindende Schmalseiten definiert ist, wobei zumindest einige der Lichtquellen dergestalt an einem Lichteinkoppelabschnitt des Lichtleiters 7, 700 angeordnet sind, dass ein Einkoppeln von zumindest einem Teil des von ihnen emittierten Lichts in den Lichtleiter 7, 700 zwischen dessen Außenseiten gewährleistet ist.

## Beschreibung

Die Erfindung betrifft eine Leuchte gemäß dem Oberbegriff von Anspruch 1 sowie ein Set zur Realisierung einer solchen Leuchte sowie ein Verfahren zum Beleuchten einer Umgebung mittels einer Leuchte.

Gattungsgemäße Leuchten werden zum Beleuchten einer Umgebung eingesetzt. Hierzu ist es erforderlich, dass die Leuchten eine erhebliche Menge an Licht, d. h eine erhebliche Lichtintensität, in einen gewünschten Abstrahlbereich, d. h. über einen bestimmten Abstrahlwinkel hinweg, abstrahlen. Es ist bekannt, bei solchen Leuchten als Lichtquellen LEDs zu verwenden, und die Erfindung bezieht sich im Besonderen auf solche Leuchten. Um zu ermöglichen, dass gattungsgemäße LED-Leuchten den beschriebenen Zweck erfüllen, werden den LEDs optische Einrichtungen nachgeordnet, durch die hindurch sie Licht abstrahlen und mittels derer die Lichtverteilung des Lichts, das von den einzelnen LEDs abgestrahlt wird, eingestellt wird. Hierzu ist einerseits bekannt, als optische Einrichtungen Optikelemente vorzusehen, die den jeweiligen LEDs zugeordnet sind und durch die hindurch das von den LEDs emittierte Licht verläuft, wobei solche Optikelemente auf bekannte Weise mit einer solchen Körperform ausgebildet werden, dass die gewünschte Lichtverteilung bereitgestellt werden kann, beispielsweise durch fachmännische Ausgestaltung der Lichteintrittsfläche und/oder Lichtaustrittsfläche und/oder Lichteintritts- und Lichtaustrittsfläche verbindende Grenzflächen. Zum anderen ist hierzu bekannt, als optische Einrichtung einen Lichtleiter vorzusehen, der einen Lichteinkoppelabschnitt aufweist, an dem die LEDs angeordnet sind. Durch fachmännische, im Stand der Technik hinreichend bekannte Anordnung der LEDs und geometrische Ausgestaltung des Lichteinkoppelabschnittes sowie Ausgestaltung des Lichtleiters ist gewährleistet, dass Licht von den LEDs in den Lichtleiter eingekoppelt wird und zwischen flächigen Außenseiten des Lichtleiters propagiert. Üblicherweise wird das eingekoppelte Licht von zumindest einer der flächigen Außenseiten hinweg über ihre gesamte flächige Erstreckung hinweg abgestrahlt, so dass der Lichtleiter bewusst so ausgelegt ist, dass das eingekoppelte Licht so in ihm propagiert, dass es sich in dem Lichtleiter zwischen seinen flächigen Außenseiten über deren gesamte flächige Erstreckung hinweg verteilt und sodann von zumindest einer dieser abgestrahlt wird. Ein solcher Lichtleiter ist üblicherweise durch einen flächigen Lichtleitkörper mit geringer Dicke ausgebildet, der an zwei voneinander wegweisenden Seiten die genannten flächigen Außenseiten aufweist und sich in einer senkrecht zu den gegenüberliegenden Außenseiten erstreckenden Richtung mit seiner Dicke erstreckt. Bei der fachmännischen Verwendung eines Lichtleiters als optische Einrichtung ist gewährleistet, dass die Lichtstrahlen dergestalt in den Lichtleiter eingekoppelt sind, dass sie über eine Propagationslänge entlang den Außenflächen und somit senkrecht zu der Richtung, die senkrecht auf den Außenflächen steht, innerhalb des Lichtleiters verläuft, die ein Vielfaches, insbesondere mindestens das Fünffache, insbesondere mindestens das Zehnfache der Dicke des Lichtleiters beträgt, wobei auf eine gemittelte Dicke des Lichtleiters und auf eine gemittelte Propagationslänge sämtlicher in den Lichtleiter eingekoppelter Strahlen abgestellt ist. Die Verwendung der verschiedenen optischen Einrichtungen bringt unterschiedliche Vor- und Nachteile mit sich. Die Verwendung von Optikelementen ermöglicht eine zielgerichtete Einstellung der Lichtverteilung des von der jeweiligen LED emittierten Lichts und eine räumlich variabel einstellbare Anordnung der LEDs, wodurch zum einen eine zweckmäßige Anordnung der LEDs, insbesondere zur Realisierung einer hinreichenden Wärmeabfuhr und/oder zur Realisierung einer kompakten Leuchte, ermöglicht ist. Allerdings bedingt das Vorsehen solcher Optikelemente zwingend, dass bei einer Betrachtung der Leuchte von außen die LEDs bzw. zugeordneten Optikelemente als helle Leuchtflecken wahrgenommen werden, was häufig als wenig ansprechend bzw. unangenehm empfunden wird. Im Stand der Technik sind zwar verschiedene Ansätze bekannt, um diesem Nachteil entgegenzuwirken, beispielsweise das Vorsehen einer möglichst diffus streuenden Abdeckung der Leuchte und/oder das Vorsehen von mehreren hintereinander geschalteten Optikelementen, doch geht damit eine Erhöhung der Herstellkosten und/oder eine Verringerung der Lichteffizienz in unerwünschtem Maße einher. Durch die Verwendung eines Lichtleiters als optische Einrichtung kann zwar eine möglichst homogen abstrahlende große Lichtabstrahlfläche bereitgestellt werden, doch ist eine solche Leuchte nur mit einer begrenzten Lichtintensität betreibbar, da die Lichtquellen gezielt am Lichteinkoppelabschnitt des Lichtleiters angeordnet werden müssen, der üblicherweise durch eine Schmalseite des Lichtleiters bereitgestellt wird, so dass die Lichtquellen eng beieinander angeordnet werden müssen, was zu einer Bündelung von Wärme führt. Darüber hinaus ist die Realisierung von Leuchten unter Verwendung eines Lichtleiters als optische Einrichtung kostenintensiv, da je nach Form einer Leuchte individuell herzustellende Lichtleiter bereitgestellt werden müssen, die an die Bedürfnisse der jeweiligen Leuchte angepasst sind, wohingegen Optikelemente demgegenüber den Vorteil aufweisen, dass sie in jeweiligen LEDs bei einer beliebigen Anordnung der LEDs, wie sie sich aus den gewünschten Eigenschaften der jeweiligen Leuchte ergeben, relativ zu den LEDs zweckmäßig angeordnet werden können.

Der vorliegenden Erfindung liegt die Aufgabe zugrunde, eine Leuchte bzw. ein Set zur Realisierung einer Leuchte bzw. ein Verfahren zum Beleuchten einer Umgebung bereitzustellen, mit der bzw. dem zumindest einer der Nachteile, die sich bei der Realisierung bzw. Verwendung von gattungsgemäßen Leuchten ergeben, zumindest teilweise behoben wird.

Als eine Lösung der der vorliegenden Erfindung zugrundeliegenden Aufgabe schlägt die Erfindung eine Leuchte mit den Merkmalen gemäß Anspruch 1 vor. Die Leuchte umfasst mehrere zum Emittieren von Licht ausgebildete Lichtquellen, wobei die Lichtquellen insbesondere jeweils als LED ausgebildet sind. In einem Betriebszustand der Leuchte, in dem die Leuchte eine Umgebung der Leuchte beleuchtet, emittieren die Lichtquellen Licht. Die Leuchte umfasst ferner eine lichtdurchlässige Abdeckung, die mit ihrer Innenseite einen Innenraum der Leuchte begrenzt und deren Außenseite zum Abstrahlen des von den Lichtquellen emittierten Lichts in eine Umgebung der Leuchte ausgebildet ist. Innenseite und Außenseite weisen somit in entgegengesetzte Richtung, und im Betriebszustand gelangt das von den Lichtquellen emittierte Licht durch den Innenraum hindurch an die Innenseite der Abdeckung und wird von der Außenseite der Abdeckung aus in die Umgebung abgestrahlt. Die Außenseite ist somit als eine Lichtabstrahlfläche der Leuchte ausgebildet. Zumindest einige der Lichtquellen gehören einer Gruppe an Lichtquellen an. Die Lichtquellen dieser Gruppe an Lichtquellen sind jeweils einem Optikelement zugeordnet, durch das eine Lichtverteilung vorgegeben ist, mit der das von der dem jeweiligen Optikelement zugeordneten Lichtquelle emittierte Licht von dem Optikelement weg zur Abdeckung hin propagiert. Die Zuordnung der Lichtquellen zu der Gruppe dient lediglich einer Einteilung der Lichtquellen der Leuchte in solche, die der Gruppe angehören, und in bei manchen Ausführungsformen darüber hinaus vorgesehene solche Lichtquellen, die der Gruppe nicht angehören. Somit gehören bestimmte, insbesondere sämtliche, der Lichtquellen der Gruppe an. In einer Ausführungsform sind sämtliche Lichtquellen der Leuchte dieser Gruppe an Lichtquellen zugeordnet, so dass jeder Lichtquelle jeweils ein Optikelement zugeordnet ist. In einer Ausführungsform umfasst die Leuchte neben den Lichtquellen, die der Gruppe an Lichtquellen angehören, weitere Lichtquellen. Indem jeder der Lichtquellen der Gruppe jeweils ein Optikelement zugeordnet ist, ist durch diese Zuordnung eine Festlegung der Lichtverteilung des von der jeweiligen Lichtquelle emittierten Lichts gegeben, mit der ausgehend von dem Optikelement das von der Lichtquelle emittierte Licht zur Abdeckung hin abgestrahlt wird. Die Leuchte umfasst ferner einen flächigen Lichtleiter, der durch einen Lichtleitkörper gebildet ist. Der Lichtleitkörper ist durch zwei flächige Außenseiten und durch die Außenseiten verbindende Schmalseiten definiert. Beispielsweise kann der Lichtleitkörper bzw. der Lichtleiter nach Art einer ebenen Platte oder schlauchartig bzw. röhrenartig ausgebildet sein. In jedem Fall ist der Lichtleitkörper durch zwei flächige Außenseiten begrenzt, zwischen denen er sich mit seiner Dicke erstreckt, wobei der Lichtleitkörper durch die Außenseiten und die die Außenseiten verbindenden Schmalseiten, die die Außenseiten über die sich aus seiner Dicke ergebende Erstreckung des Lichtleitkörpers hinweg verbinden, definiert ist. Zumindest einige der Lichtquellen der Leuchten sind dergestalt an einem Lichteinkoppelabschnitt des Lichtleiters angeordnet, dass ein Einkoppeln von zumindest einem Teil des von ihnen emittierten Lichts in den Lichtleiter zwischen dessen Außenseiten gewährleistet ist. Das zwischen die Außenseiten eingekoppelte Licht propagiert zwischen den Außenseiten innerhalb des flächigen Lichtleiters gemäß den typischen Eigenschaften eines Lichtleiters. Eingekoppeltes Licht tritt somit nicht einfach unter Durchlaufen von Refraktion an den Außenseiten durch den Lichtleiter durch, indem es an einer Außenseite in den Lichtleiter eintritt und nur seine Erstreckung zwischen den Außenseiten durchquert und an der anderen Außenseite austritt, sondern es propagiert zwischen und entlang seiner Außenseiten, wobei das eingekoppelte Licht zumindest zum überwiegenden Teil, insbesondere mehr als 99 % des eingekoppelten Lichts, mehrfach innerhalb des Lichtleiters reflektiert wird. Das in den Lichtleiter eingekoppelte Licht beträgt weniger als 50 % des von der Gruppe an Lichtquellen insgesamt emittierten Lichts, wobei der Lichtleiter zum Abstrahlen von zumindest 80 % des in ihn eingekoppelten Lichts ausgebildet ist. Die Prozentangaben beziehen sich auf den prozentualen Anteil an der Lichtintensität. Die Eigenschaft des Lichtleiters, in ihn eingekoppeltes Licht zu einem entsprechend hohen Prozentsatz abzustrahlen, ist im Stand der Technik hinreichend bekannt und durch herkömmliche Maßnahmen ohne Weiteres realisierbar, beispielsweise durch Aufbringen einer Auskoppelstruktur auf einer zuvor glatten flächigen Außenseite des Lichtleiters, beispielsweise durch Laserverfahren oder Druckverfahren, oder durch Realisierung von unebenen flächigen Außenseiten, wobei stets das im Stand der Technik bekannte Prinzip verwendet wird, dass eine zur Propagation im Lichtleiter erforderliche interne Reflexion verhindert oder verringert wird, indem eine Oberflächenvariation an einer der flächigen Außenseiten vorgenommen wird, die dazu führt, dass ein Anteil des auf die Oberflächenvariation auftreffenden Lichts dadurch so abgelenkt wird, dass er anschließend an dieser flächigen Außenseite oder an der ihr gegenüberliegenden flächigen Außenseite aus dem Lichtleiter austritt. Das Einkoppeln von Licht mit einem hinreichenden Prozentsatz in den Lichteinkoppelabschnitt ist für einen Fachmann ohne Weiteres durch entsprechende Ausgestaltung des Lichtleiters bzw. Lichteinkoppelabschnittes und Anordnung des Lichtleiters relativ zur Lichtquelle realisierbar, beispielsweise durch Anordnen von Lichtquellen dergestalt, dass ihr Licht gemäß ihrer Lichtverteilung in einem definierten Winkelbereich auf den Lichteinkoppelabschnitt auftrifft und in Abhängigkeit von dem Auftreffwinkel ein Einkoppeln erfolgt oder durch Reflexion ausgeschlossen wird. Das in den Lichtleiter eingekoppelte Licht kann beispielsweise zumindest teilweise von den Lichtquellen der Gruppe emittiert sein, wobei die Optikelemente und Lichtquellen der Gruppe so ausgebildet und relativ zum Lichtleiter angeordnet sind, dass der über den Lichteinkoppelabschnitt eingekoppelte Anteil des von diesen Lichtquellen emittierten Lichts auf einen Anteil von weniger als 50 % der gesamten, von den Lichtquellen der Gruppe emittierten Lichts eingestellt ist. Ferner ist auch möglich, nur einige der Lichtquellen der Gruppe so relativ zum Lichteinkoppelabschnitt anzuordnen, dass ein Einkoppeln von Licht, das sie emittiert haben, in den Lichtleiter über den Lichteinkoppelabschnitt ermöglicht ist. Ferner ist auch möglich, weitere Lichtquellen vorzusehen, die nicht der Gruppe an Lichtquellen angehören, wobei diese weiteren Lichtquellen am Lichteinkoppelabschnitt des Lichtleiters angeordnet werden und die Lichtquellen der Gruppe so relativ zum Lichtleiter angeordnet werden, dass ein Einkoppeln von Licht, das sie emittiert haben, in den Lichteinkoppelabschnitt unmöglich ist. Bevorzugt ist der Lichtleiter in der Leuchte dergestalt relativ zu sämtlichen Lichtquellen der Leuchte angeordnet, dass ein Einkoppeln von Licht, das anschließend in dem Lichtleiter zwischen seinen Außenseiten an diesen entlang propagiert, ausschließlich über seinen Lichteinkoppelabschnitt ermöglicht ist.

Die erfindungsgemäße Ausgestaltung der Leuchte bringt mehrere Vorteile mit sich. Aufgrund des Vorsehens von einer Gruppe an Lichtquellen, denen jeweils ein Optikelement zugeordnet ist, kann auf einfache Weise unter Verwendung von gezielt und in großem Maßstab hergestellte Optikelemente und der gezielten Anordnung von gewünschten Optikelementen relativ zu den Lichtquellen dieser Gruppe eine Lichtverteilung vorgegeben werden, mit der die jeweilige Anordnung bestehend aus Lichtquelle und zugeordnetem Optikelement Licht zur Abdeckung hin abstrahlt. Somit kann hierdurch gezielt Einfluss auf die Lichtverteilung genommen werden, mit der die gesamte Leuchte bzw. die Abdeckung der Leuchte Licht in die Umgebung abstrahlt. Das vorliegend erläuterte Emittieren von Licht durch die Lichtquellen liegt im Betriebszustand der Leuchte vor. Darüber hinaus ist durch das Vorsehen eines Lichtleiters, in den nur weniger als 50 % des von den Lichtquellen der Gruppe ausgesandten Lichts eingekoppelt wird, eine zusätzliche Möglichkeit der Einflussnahme auf die Lichtverteilung des von der Leuchte abgestrahlten Lichts ermöglicht. Denn der Lichtleiter kann über seine flächige Außenseite großflächig Licht abgeben, was zum einen das Vermeiden von visuell wahrnehmbaren, ästhetisch auf unerwünschten Lichtpunkten innerhalb der Leuchte zumindest reduziert, zum anderen kann mit der Ausgestaltung des Lichtleiters, insbesondere seiner flächigen Außenseite, über die er Licht zur Abdeckung hin abstrahlt, weiteren Einfluss auf die Lichtverteilung des von der Leuchte bzw. Abdeckung der Leuchte abgestrahlten Lichts genommen werden. Allgemein bevorzugt sind die Abdeckung der Lichtleiter voneinander separate Bauteile. In einer Ausführungsform können Lichtleiter und Abdeckung einstückig miteinander verbunden sein. In einer Ausführungsform sind Lichtleiter und Abdeckung voneinander beabstandet, insbesondere dergestalt voneinander beabstandet, dass von dem Lichtleiter abgestrahltes Licht zunächst einen zwischen Abdeckung und Lichtleiter vorgesehenen Zwischenraum durchläuft, bevor es an die Innenseite der Abdeckung gelangt und somit zur Abdeckung gelangt und anschließend von der Außenseite der Abdeckung die Umgebung der Leuchte abgestrahlt wird. In einer Ausführungsform sind Abdeckung und Lichtleiter voneinander separat hergestellte Bauteile, jedoch miteinander verbunden und begrenzen gemeinsam den Innenraum der Leuchte, wobei im Betriebszustand der Leuchte ein erster Teil des von der Leuchte in ihre Umgebung abgestrahlten Lichts von der Außenseite der Abdeckung abgestrahlt wird und ein zweiter Teil des von der Leuchte in ihre Umgebung abgestrahlten Lichts, der bevorzugt weniger als 50 %, insbesondere weniger als 30 % des ersten Teils beträgt, von einer der Außenseiten des Lichtleiters abgestrahlt wird, wohingegen in einer anderen Ausführungsform sämtliches im Betriebszustand von der Leuchte abgestrahltes Licht von der Außenseite der Abdeckung in die Umgebung abgestrahlt wird. In einer Ausführungsform bildet der Lichtleiter zumindest einen Teil der Abdeckung aus, sodass die Außenseite der Abdeckung durch eine der Außenseiten des Lichtleiters ausbildet. Bei einer solchen Ausführungsform, bei der der Lichtleiter die Abdeckung vollständig ausbildet, tritt mindestens 50 % des von der Gruppe der Lichtquellen imitierten Lichts durch den Lichtleiter hindurch, ohne in den Lichtleiter eingekoppelt zu werden und nach dem Einkoppeln innerhalb des Lichtleiters zwischen seinen Außenseiten zu propagieren, sondern dieses Licht durchtritt den Lichtleiter lediglich, in dem Refraktion beim Eintreten an einer der beiden Außenseiten und beim Austreten an der gegenüberliegenden Außenseite des Lichtleiters erfolgt, ohne dass das Licht durch interne Reflexion zur Propagation innerhalb des Lichtleiters gezwungen wird. Bevorzugt sind bei einer solchen Ausführungsform einige der Lichtquellen am Lichteinkoppelabschnitt des Lichtleiters angeordnet, sodass von ihnen imitiertes Licht zumindest teilweise in den Lichtleiter eingekoppelt wird und anschließend zwischen dessen Außenseiten propagiert, wohingegen andere Lichtquellen so an einer den innenraumbegrenzenden Außenseite des Lichtleiters angeordnet sind, dass von ihnen ausgesandtes Licht lediglich an dieser Seite in den Lichtleiter eingekoppelt wird und ohne interne Reflexion an der gegenüberliegenden Außenseite des Lichtleiters, die die Außenseite der Abdeckung ausbildet, mit Refraktion aus dem Lichtleiter austritt und von der Leuchte in die Umgebung abgestrahlt wird.

Allgemein sei an dieser Stelle darauf hingewiesen, dass einem Fachmann fachmännische Möglichkeiten geläufig sind, die Lichtverteilung einzustellen, mit der ein Lichtleiter über eine seiner flächigen Außenseiten Licht abgibt. Beispielsweise kann durch die Konturierung der Oberfläche der anderen und somit gegenüberliegenden Außenseite Einfluss auf die Lichtverteilung genommen werden, die von der einen, als Lichtabstrahlseite ausgebildeten Außenseite abgestrahlt wird. So emittieren bekannterweise Lichtleiter, bei denen die Oberfläche der der Lichtabstrahlseite gegenüberliegenden Seite mit mit einer Rauhigkeit versehenen kleinen Einprägungen ausgestaltet sind, mit einer annähernd lambertschen Lichtverteilung, wohingegen durch die Einprägung linsenartiger, glatter Vertiefungen an dieser Außenseite eine breitstrahlendere Lichtverteilung erreicht werden kann. Ferner kann durch das Herstellverfahren des Lichtleiters Einfluss auf die Lichtverteilung genommen werden. So weisen Einprägungen, die an der Außenseite eines mittels Extrusionsverfahrens hergestelltem Lichtleiterkörper vorgenommen werden, eine andere geometrische Form auf als Einprägungen, die an mittels Gießverfahrens hergestelltem Lichtleiterkörper vorgenommen werden, wodurch sich eine jeweils andere Lichtverteilung des von dem Lichtleiter ausgesandten Lichts ergibt. Beim Einprägen von Linsenstrukturen auf den Lichtleiter kann ebenfalls gezielt durch Design der Linsenstrukturen Einfluss auf die Lichtverteilung genommen werden. Auch können durch Realisierung des Lichtleiters mittels Spritzgießverfahrens Lichtauskoppelstrukturen besonders vielseitig und günstig realisiert werden. Darüber hinaus kann auch durch die geometrische Ausgestaltung, insbesondere Konturierung, der Lichtabstrahlseite selbst Einfluss auf die abgestrahlte Lichtverteilung genommen werden. Dem Fachmann sind eine Vielzahl an Einstellmöglichkeiten der von einem Lichtleiter abgestrahlten Lichtverteilung durch Vornehmen von Maßnahmen beim Herstellen des Lichtleiters bekannt. Als besonders vorteilhaft hat sich herausgestellt, den Lichtleiter mittels Spritzgießverfahrens herzustellen und Lichtauskoppelstrukturen des Lichtleiters durch eine Folie auszubilden, an die während des Spritzgießverfahrens Kunststoff angespritzt wird. Die Erfindung betrifft somit allgemein bevorzugt einen Lichtleiter, der eine Folie umfasst, die Lichtauskoppelstrukturen aufweist, wobei sich die Folie über einen zumindest überwiegenden Anteil der flächigen Erstreckung der beiden flächigen Außenseiten des Lichtleitkörpers oder zumindest über einen zumindest überwiegenden Anteil der flächigen Erstreckung der beiden flächigen Außenseiten des Anteils des Lichtleitkörpers, der durch eines der Lichtleiterelemente des Lichtleiters ausgebildet ist, hinweg erstreckt. Besonders bevorzugt bildet die Folie eine der Außenseiten des Lichtleitkörpers bzw. eines der Lichtleitelemente aus. Beispielsweise kann ein solcher Lichtleiter bzw. Lichtleitelement hergestellt werden, indem in ein Spritzgießwerkzeug die Folie mit den Lichtauskoppelstrukturen eingelegt wird und anschließend in das Spritzgießwerkzeug Kunststoff eingespritzt wird, der hierdurch an zumindest eine der flächigen Seiten der Folie angespritzt wird. Allgemein bevorzugt weist der Lichtleitkörper bzw. das Lichtleitelement eine Dicke auf, mit der er sich zwischen seinen beiden Außenseiten erstreckt, wobei die Folie, die Lichtauskoppelstrukturen umfasst, weniger als 20 %, insbesondere weniger als 10 %, insbesondere weniger als 5 % der Dicke des Lichtleitkörpers ausbildet. Die Realisierung eines Lichtleiters bzw. Lichtleitelements mittels Spritzgießverfahrens unter Verwendung einer Folie mit Lichtauskoppelstrukturen ist allgemein vorteilhaft, besonders vorteilhaft jedoch im Rahmen der Realisierung von Ausführungsformen der erfindungsgemäßen Leuchte. Denn der Lichtleiter kann bei Ausführungsformen der erfindungsgemäßen Leuchte besonders vorteilhaft zur Entstehung der Abstrahlcharakteristik der Leuchte beitragen, wobei durch das Vorsehen von bestimmten Lichtauskoppelstrukturen die Abstrahlcharakteristik des Lichtleiters und somit die der gesamten Leuchte gezielt beeinflusst werden kann. Indem beispielsweise ein selbes Spritzgießwerkzeug zur Realisierung unterschiedlicher Lichtleiter verwendet werden kann, deren Lichtleitkörper eine durch das Spritzgießwerkzeug festgelegten Geometrie aufweisen, die sich jedoch in ihren Lichtauskoppelstrukturen unterscheiden, kann besonders kostengünstig unter Verwendung eines selben Spritzgießwerkzeug eine Vielzahl an unterschiedlichen Leuchten bereitgestellt werden, deren Lichtleitkörper eine selbe Form aufweisen, die sich jedoch in ihren Lichtauskoppelstrukturen unterscheiden, sodass durch Einstellung der Lichtauskoppelstrukturen mittels gezielte Verwendung einer ausgewählten Folie eine Leuchte besonders gezielt an eine bestimmte Beleuchtungsanforderung angepasst werden kann. Die Erfindung betrifft somit im Besonderen ein Set an Leuchten, die jeweils erfindungsgemäß ausgebildet sind, wobei die Leuchten einen jeweils anderen Lichtleiter aufweisen, wobei die verschiedenen Lichtleiter einen jeweils anderen Lichtleitkörper aufweisen, wobei die verschiedenen Lichtleitkörper eine selbe Form aufweisen, sich jedoch in ihrer Lichtauskoppelstruktur unterscheiden, wobei insbesondere jeder der Lichtleitkörper eine jeweils andere Folie aufweist, die Lichtauskoppelstrukturen des jeweiligen Lichtleitkörpers ausbildet.

Allgemein bevorzugt ist der Lichtleitkörper zumindest abschnittsweise rotationssymmetrisch ausgebildet, beispielsweise nach Art einer kreisrunden Scheibe, nach Art eines Zylinders beziehungsweise Hohlzylinders mit rundem Querschnitt oder nach Art eines Kreisrings. Die zumindest abschnittsweise rotationssymmetrische Ausgestaltung bezieht sich darauf, dass zumindest über einen Winkelbereich um eine Rotationsachse (beispielsweise die vertikale Mittenachse der Leuchte) hinweg der Lichtleitkörper rotationssymmetrisch ist, sodass der Lichtleitkörper innerhalb dieses Winkelbereichs für jeden Winkel eine selbe Form aufweist. Besonders bevorzugt ist vorgesehen, dass der Lichtleitkörper zumindest über einen radialen Bereich hinweg vollkommen rotationssymmetrisch um die Rotationsachse ist, wobei der radiale Bereich durch einen Anfangsradius und einen Endradius seiner radialen Erstreckung festgelegt ist und die Radien einen radialen Abstand von der Rotationsachse definieren. Besonders bevorzugt weist der Lichtleiter Lichtauskoppelstrukturen auf, die innerhalb der Abschnitte, innerhalb derer der Lichtleitkörper rotationssymmetrisch ist, zirkular verlaufen, sodass sie entlang einer um die Rotationsachse auf einen bestimmten Radius verlaufenden Kreisbahn eine sich periodisch wiederholende Kreisbahnstruktur aufweisen, wobei mehrere radial zueinander versetzte, wie erläutert ausgebildete Kreisbahnstrukturen innerhalb eines solchen Abschnitts vorgesehen sind. Durch das Vorsehen solcher zirkularer Lichtauskoppelstrukturen kann eine besonders gleichmäßige Lichtabstrahlung durch den Lichtleiter bei einer zumindest abschnittsweise rotationssymmetrischen Ausgestaltung des Lichtleiters gewährleistet sein. Bevorzugt weist der Lichtleitkörper eine vollkommen rotationssymmetrische Grundform auf, wobei diese Grundform insbesondere durch Aussparungen unterbrochen sein kann, sodass der Lichtleitkörper nur abschnittsweise rotationssymmetrisch ausgebildet ist.

Allgemein bevorzugt sind die Lichtquellen der Leuchte dergestalt relativ zum Lichtleiter bzw. zu dessen Einkoppelabschnitt angeordnet, dass zumindest 2 %, insbesondere zumindest 3 %, insbesondere zumindest 5 %, insbesondere zumindest 10 % des gesamten Lichts, das von sämtlichen Lichtquellen der Leuchte emittiert wird, in den Leichtleiter eingekoppelt wird. Dabei ist selbstverständlich auf den prozentualen Anteil bezogen auf die Gesamtintensität des Lichts abgestellt, die sämtliche Lichtquellen der Leuchte im Betriebszustand der Leuchte emittieren, wobei im Betriebszustand gemäß der vorliegenden Definition des Begriffs Betriebszustand selbstverständlich die Lichtquellen der Leuchten zum Emittieren von Licht angesteuert bzw. versorgt sind. Bevorzugt sind die vorliegend angegebenen prozentualen Werte in jedem möglichen bestimmungsgemäßen Betriebszustand der Leuchte, in den die Leuchte durch Ansteuerung der Versorgung ihrer Lichtquellen bringbar ist, damit sie über ihre Abdeckung Licht in ihre Umgebung ausstrahlt, gegeben.

In einer Ausführungsform ist der Lichteinkoppelabschnitt mit einem Winkel von mindestens 45° zu zumindest einer der Außenseiten abgewinkelt. Im Falle eines nicht eben verlaufenden Lichteinkoppelabschnittes bzw. einer nicht eben verlaufenden Außenseite ist auf den Winkel zwischen dem jeweiligen gemittelten Verlauf von Lichteinkoppelabschnitt bzw. Außenseite abgestellt. Besonders bevorzugt beträgt der Winkel mindestens 60°, insbesondere beträgt der Winkel 90°. Durch das Vorsehen eines Winkels von mindestens 45°, insbesondere eines Winkels von 90°, kann gewährleistet sein, dass ein besonders hoher Anteil des auf den Lichteinkoppelabschnitt auftreffenden Lichts, das von zumindest einigen der Lichtquellen emittiert wurde und von diesen zum Lichteinkoppelabschnitt gelangt ist, in den Lichtleiter eingekoppelt wird, so dass es anschließend zwischen seinen Außenseiten propagiert.

In einer Ausführungsform ist zumindest eine der beiden Außenseiten des Lichtleiters als Lichtabstrahlseite des Lichtleiters ausgebildet, wobei die zumindest eine Lichtabstrahlseite zum Abstrahlen des in den Lichtleiter eingekoppelten Lichts zu der Abdeckung hin ausgebildet ist. Besonders bevorzugt ist an der zumindest einer der beiden Außenseiten, insbesondere zumindest an der anderen der beiden Außenseiten, die somit der Lichtabstrahlseite gegenüberliegt bzw. ein anderes Ende des Lichtleiters begrenzt als die Lichtabstrahlseite, eine Lichtauskoppelstruktur vorgesehen, beispielsweise in Form einer aufgedruckten oder eingeprägten oder eingelaserten Lichtauskoppelstruktur oder einer direkt im Herstellverfahren des Lichtleiters vorgesehenen Lichtauskoppelstruktur, wobei beispielsweise der Lichtleiter mittels Spritzgießverfahrens hergestellt sein kann und dabei die Lichtauskoppelstruktur direkt im mittels Spritzgießverfahrens hergestellten, den Lichtleiter ausbildenden Körper vorgesehen sein kann. Allgemein bevorzugt ist der Lichtleiter in einem zweistufigen Verfahren hergestellt, wobei in einem ersten Verfahrensschritt der Lichtleitkörper als Vorkörper mit seiner geometrischen Form hergestellt bzw. bereitgestellt wird und anschließend auf zumindest eine der beiden Außenseiten eine Lichtauskoppelstruktur aufgebracht wird. In einer Ausführungsform ist genau eine der flächigen Außenseiten des Lichtleiters als Lichtabstrahlseite ausgebildet, wohingegen an der anderen der beiden Außenseiten ein flächiger Reflektor angeordnet ist. Der flächige Reflektor kann beispielsweise als Reflektorbeschichtung der anderen Außenseite oder als Reflektorblech oder als reflektierender Träger ausgebildet sein. Indem nur eine der beiden Außenseiten als Lichtabstrahlseite ausgebildet ist und an der anderen der beiden Außenseiten ein Reflektor angeordnet ist, kann besonders effektiv gewährleistet sein, dass ein sehr hoher Anteil, insbesondere mindestens 80 %, insbesondere mindestens 90 %, insbesondere mindestens 95 %, des in den Lichtleiter eingekoppelten Lichts an der Lichtabstrahlseite aus dem Lichtleiter ausgekoppelt und von diesem abgestrahlt wird.

Bevorzugt weist die Lichtabstrahlseite in eine Hauptabstrahlrichtung der Leuchte, in der die Leuchte den überwiegenden Anteil des von ihr bzw. ihrer Abdeckung ausgesandten Lichts abstrahlt.

In einer Ausführungsform ist der Lichtleiter mit seinem Lichtleiterabschnitt dergestalt relativ zu den Lichtquellen der Leuchte angeordnet und ausgebildet, dass das in den Lichtleiter eingekoppelte Licht über dessen gesamte, von den Schmalseiten begrenzte flächige Erstreckung entlang den flächigen Außenseiten durch den Lichtleiter hindurch propagiert. Somit durchläuft das in den Lichtleiter eingekoppelte Licht die gesamte flächige Erstreckung des Lichtleiters, die durch die flächige Erstreckung seiner flächigen Außenseite definiert ist. Dabei muss nicht zwingend in jedem Abschnitt seiner flächigen Erstreckung dieselbe Lichtintensität innerhalb des Lichtleiters vorherrschen, jedenfalls ist bei der vorteilhaften Ausführungsform jedoch der gesamte Lichtleitkörper von Licht durchflossen, das zuvor an seinem Lichteinkoppelabschnitt in ihn eingekoppelt worden ist.

In einer Ausführungsform sind die Optikelemente und der Lichtleiter jeweils als separate Bauteile ausgebildet. In einer Ausführungsform sind die Optikelemente von der Abdeckung beabstandet angeordnet. In einer Ausführungsform ist der Lichtleiter von der Abdeckung beabstandet angeordnet. Aufgrund der beabstandeten Anordnung ist gewährleistet, dass das von den Optikelementen bzw. dem Lichtleiter abgestrahlte Licht aufgrund der jeweiligen Beabstandung von der Abdeckung durch in dem Innenraum vorgesehenes Medium propagiert, bevor es zur Abdeckung gelangt. Bevorzugt ist das in dem Innenraum vorgesehene Medium Luft, die insbesondere zumindest im Wesentlichen mit der die Leuchte umgebenden Umgebungsluft identisch ist, indem zwischen dem Innenraum der Leuchte und der Umgebung eine Belüftungsmöglichkeit durch Vorsehen einer Belüftungseinrichtung gegeben ist. In einer Ausführungsform sind die Optikelemente von dem Lichtleiter zumindest durch einen Spalt beabstandet, der mit dem in dem Innenraum vorgesehene Medium gefüllt ist. Indem die Optikelemente und/oder der Lichtleiter von der Abdeckung beabstandet sind und/oder indem die Optikelemente von dem Lichtleiter beabstandet sind, kann durch die Gestaltung der Außenseiten von Abdeckung, Optikelement und/oder Lichtleiter in besonders hohem Maße Einfluss auf die Richtung genommen werden, in der die Lichtstrahlen durch die gesamte Leuchte hindurch bis zur Außenseite der Abdeckung verlaufen, da sich durch das Vorsehen des Abstandes und dem entsprechenden Propagieren des Lichts über Medien mit unterschiedlichen Brechungsindizes hinweg ein hohes Maß an Lenkungsmöglichkeiten zum Lenken der Lichtstrahlen ergeben.

In einer Ausführungsform sind zumindest einige der Optikelemente in einer ihnen jeweils zugeordneten, in dem Lichtleiter vorgesehenen Aussparung angeordnet. Dies kann den besonderen Vorteil mit sich bringen, dass die Optikelemente gezielt zum Lichtleiter ausgerichtet sein können, wobei die Aussparung in dem Lichtleiter an die äußere Abmessung des Optikelements gezielt angepasst sein kann. Darüber hinaus können standardmäßige Optikelemente verwendet und mit dem Lichtleiter kombiniert werden, indem die Aussparung an die standardmäßigen Optikelemente angepasst ist. Hierdurch kann die Realisierung der erfindungsgemäßen Leuchte mit ihren vorteilhaften Eigenschaften auf besonders kostengünstige Weise ermöglicht sein. Allgemein bevorzugt umschließt der Lichtleiter das in der jeweiligen Aussparung angeordnete optische Element horizontal umlaufend, wobei sich seine Außenseiten in den die Aussparung umlaufenden Bereich jeweils horizontal erstrecken und seine Dicke seiner vertikalen Erstreckung entspricht. Allgemein bevorzugt ist zwischen dem Optikelement und dem Lichtleiter innerhalb der Aussparung ein Spalt vorgesehen, der sich mit einer Spaltbreite zwischen dem Optikelement und dem an die Aussparung angrenzenden Bereich des Lichtleiters erstreckt, wobei die spaltbreite bevorzugt um das Optikelement umlaufend konstant ist. Allgemein bevorzugt ist der Bereich des Lichtleiters, der die Aussparung begrenzt, als zumindest ein Abschnitt des Lichteinkoppelabschnittes des Lichtleiters ausgebildet. Bevorzugt gelangt im Betriebszustand der Leuchte ausschließlich von den Lichtquellen, die den Optikelementen zugeordnet sind, die jeweils in einer in dem Lichtleiter vorgesehenen Aussparung angeordnet sind, emittiertes Licht über den Lichteinkoppelabschnitt in den Lichtleiter. Diese Lichtquellen gehören der genannten Gruppe an. Bevorzugt gelangt nur von diesen, den in den jeweiligen Aussparungen angeordneten Optikelementen im Betriebszustand Licht in den Lichtleiter, d. h. in den Lichtleitkörper. In einer Ausführungsform sind die Aussparungen durch zwischen den flächigen Außenseiten verlaufende Schmalseitenabschnitte begrenzt, wobei die Schmalseitenabschnitte zumindest einen Teil, insbesondere einen überwiegenden Teil des Lichteinkoppelabschnittes des Lichtleiters ausbilden. Besonders bevorzugt ist der Lichteinkoppelabschnitt des Lichtleiters ausschließlich durch solche Schmalseitenabschnitte ausgebildet, die die Aussparungen begrenzen, in denen jeweils zumindest ein Optikelement angeordnet ist. In einer Ausführungsform stehen die in den Aussparungen angeordneten Optikelemente jeweils über eine der Außenseiten des Lichtleiters vor, insbesondere über die als Lichtabstrahlseite des Lichtleiters ausgebildete flächige Außenseite vor. Die Optikelemente sind somit bevorzugt in den Aussparungen dergestalt angeordnet, dass sie von Schmalseitenabschnitten des Lichtleiters horizontal umlaufend umschlossen sind, wohingegen sie vertikal über den Lichtleiter, d. h. über eine seiner flächigen Außenseiten, vorstehen. Bevorzugt stehen die Optikelemente an der als Lichtabstrahlseite des Lichtleiters ausgebildeten flächigen Außenseite des Lichtleiters weiter über diesen vor als an der anderen der beiden flächigen Außenseiten. In einer Ausführungsform erstrecken sich die Optikelemente, die in den Aussparungen angeordnet sind, jeweils über mindestens 70 %, insbesondere mindestens 80 %, insbesondere mindestens 90 %, insbesondere mindestens 100 % einer Dicke des Lichtleiters hinweg, mit der er sich zwischen seinen beiden Außenseiten um die jeweilige Aussparung herum erstreckt. Bei Ausführungsformen, bei denen die Dicke die vertikale Erstreckungslänge des Lichtleiters angibt, erstrecken sich die Optikelemente somit über mindestens 70 % des vertikalen Bereichs, innerhalb dessen sich der Lichtleiter erstreckt. In einer Ausführungsform stehen die Optikelemente über zumindest eine der Außenseiten des Lichtleiters vor, d.h. über den Lichtleiter bzw. diese Außenseite des Lichtleiters vor. Insbesondere stehen die Optikelemente zumindest an der Lichtabstrahlseite des Lichtleiters über den Lichtleiter vor, insbesondere nur an der Lichtabstrahlseite oder an der Lichtabstrahlseite weiter als einer anderen der Außenseiten, die nicht als Lichtabstrahlseite ausgebildet ist. In einer Ausführungsform stehen die Optikelemente über die zumindest eine Außenseite um zumindest 10 %, insbesondere zumindest 20 % der Dicke des Lichtleiters vor, mit der er sich zwischen seinen beiden Außenseiten um die Aussparung herum erstreckt. In einer Ausführungsform weisen die Optikelemente eine Höhe auf, die mindestens das 1,1-Fache, insbesondere mindestens das 1,2-Fache, insbesondere mindestens das 1,3-Fache, insbesondere mindestens das 1,5-Fache einer Dicke des Lichtleiters beträgt, mit der er sich zwischen seinen beiden Außenseiten um die Aussparung herum erstreckt. Bei einer Variation der Dicke des Lichtleiters entlang seiner Erstreckung um die Aussparung herum ist auf die gemittelte Dicke des Lichtleiters abgestellt. Besonders bevorzugt stehen die Optikelemente um mindestens 30 %, insbesondere mindestens 50 %, insbesondere mindestens 60 %, insbesondere mindestens 70 % ihrer Höhe über die genannte Außenseite des Lichtleiters vor, wobei insbesondere die Höhe der Optikelemente eine Erstreckung der Optikelemente in Vertikalrichtung ist, wohingegen der Lichtleiter die Optikelemente horizontal umschließt und die Dicke seiner Erstreckungslänge in Vertikalrichtung angibt.

In einer Ausführungsform weisen die in den Aussparungen angeordneten Optikelemente jeweils eine Lichtabstrahlfläche auf, von der aus sie mehr als 95 %, insbesondere mehr 99 % des von ihnen abgestrahlten, zuvor von der ihnen zugeordneten Lichtquelle emittierten Lichts abstrahlen, wobei die Lichtabstrahlfläche so weit von dem an die Aussparung angrenzenden Bereich des Lichtleiters, der insbesondere durch die genannten Schmalseitenabschnitte ausgebildet ist, beabstandet ist und das Optikelement mit seiner Lichtabstrahlfläche so relativ zur Lichtabstrahlseite des Lichtleiters angeordnet ist, dass mehr als 50 %, insbesondere mehr als 70 %, insbesondere mehr als 80 % des von der Lichtabstrahlfläche abgestrahlten Lichts ohne Interaktion mit dem Lichtleiter zur Innenseite der Abdeckung gelangt. Bevorzugt ist dabei das jeweilige Optikelement mit einem Ende einer Seite seiner Lichtabstrahlfläche, die in dieselbe Richtung wie die Lichtabstrahlseite des Lichtleiters weist, gezielt relativ zum das Optikelement umgebenden Bereich der Lichtabstrahlseite angeordnet. Beispielsweise kann die Lichtabstrahlfläche mit einem Flächenabschnitt über die Lichtabstrahlseite vorstehen, so dass sie von diesem Flächenabschnitt direkt Licht oberhalb des Lichtleiters bzw. seiner Lichtabstrahlseite zur Abdeckung hin abstrahlt. Beispielsweise kann der Abstand, den die Lichtabstrahlfläche zum das Optikelement umgebenden Bereich des Lichtleiters aufweist, gezielt in Abhängigkeit von der Position des genannten Endes des Optikelements relativ zur Lichtabstrahlseite des Lichtleiters ausgewählt werden und somit die Größe der Aussparung gezielt in Abhängigkeit von der Dicke und/oder relativen vertikalen Position des Optikelements relativ zum Lichtleiter ausgewählt werden.

In einer Ausführungsform sind die Optikelemente aus Kunststoff hergestellt. In einer Ausführungsform sind die Optikelemente durch Spritzgießverfahren hergestellt. In einer Ausführungsform ist der Lichtleiter aus Kunststoff hergestellt. In einer Ausführungsform ist der Lichtleiter aus einem Vorkörper durch Bearbeitung des Vorkörpers mittels Schneidverfahrens und/oder Oberflächenmodifikation hergestellt. Der Vorkörper kann beispielsweise ein mittels Extrusionsverfahrens hergestellter Körper, insbesondere Kunststoffplatte, oder ein mittels Gießverfahrens hergestellter Körper, insbesondere eine gegossene Kunststoffplatte sein. Das Gießverfahren kann ein druckfreies Gießverfahren sein, bei dem flüssige Kunststoffmasse in einem offenen Behälter angeordnet wird und anschließend aushärtet. In einer Ausführungsform ist der Vorkörper mittels Spritzgießverfahrens hergestellt. Bei dieser besonderen, im Stand der Technik allgemein bekannten Form eines Gießverfahrens wird Kunststoff unter Druck in eine Spritzgießform gespritzt, wodurch mittels Ausgestaltung der Spritzgießform in besonders hohem Maße Einfluss auf die Gestaltung des Vorkörpers genommen werden kann. Im Vergleich zu einem druckfreien Gießverfahren sind somit die Gestaltungsmöglichkeiten größer, jedoch ist die Herstellung einer Spritzgießform aufwändig. Das Schneidverfahren kann beispielsweise ein Laser-Schneidverfahren sein. Die Oberflächenmodifikation kann beispielsweise mittels Aufdruckens, Aufprägens oder Gravur, insbesondere Lasergravur, erfolgen.

In einer Ausführungsform ergibt eine Summe der von den Optikelementen, die jeweils in einer der Aussparungen angeordnet sind, vorgegebenen Lichtverteilungen des von der ihnen zugeordneten Lichtquelle emittierten Lichts eine Gesamtlichtverteilung, die sich über einen räumlichen Lichtverteilungsabstrahlwinkel hinweg erstreckt. Die Gesamtlichtverteilung ist somit die Verteilung von sämtlichem Licht, das von den sämtlichen Lichtquellen emittiert ist, die den Optikelementen zugeordnet sind, die in den Aussparungen des Lichtleiters angeordnet sind. Der räumliche Lichtverteilungsabstrahlwinkel gibt einen dreidimensionalen Raumwinkel an, über den hinweg sich die Gesamtlichtverteilung erstreckt, wobei die Grenzen des Lichtverteilungsabstrahlwinkels an solchen Stellen gegeben sind, an denen die in dem jeweiligen Grenzwinkel abgestrahlte Intensität weniger als 5 %, insbesondere weniger als 3 % der Maximalintensität beträgt, wobei die Maximalintensität die Intensität in dem Raumwinkel ist, in den gemäß der Gesamtlichtverteilung die meiste Intensität abgestrahlt wird. Bevorzugt ist der Lichtleiter dazu ausgebildet, dass das von ihm im Betriebszustand der Leuchte abgestrahlte Licht, das selbstverständlich zuvor an seinem Lichteinkoppelabschnitt in ihn eingekoppelt worden ist, zumindest zum überwiegenden Teil, insbesondere vollständig, innerhalb des Lichtverteilungsabstrahlwinkels, über den hinweg sich die Gesamtlichtverteilung erstreckt, vom Lichtleiter wegstrahlt. Bevorzugt wird 80 %, insbesondere mindestens 90 % des Lichts, das der Lichtleiter abstrahlt, ausschließlich innerhalb des genannten Lichtverteilungsabstrahlwinkels vom Lichtleiter weg abgestrahlt. Die erläuterte vorteilhafte Ausführungsform bringt den besonderen Vorteil mit sich, dass der Lichtleiter eine einfache optische Aufhellung von Bereichen innerhalb der Leuchte, insbesondere zwischen Lichtquellen der Leuchte gewährleistet, wodurch die Leuchte für einen Beobachter besonders angenehm ist, da zum einen die Existenz von hellen Leuchtflecken in der Leuchte nach Möglichkeit reduziert ist und zum anderen eine Blendwirkung der Leuchte reduziert werden kann. In einer Ausführungsform ist vorgesehen, dass über einen Hauptabstrahlwinkel der Gesamtlichtverteilung hinweg die in den jeweiligen Raumwinkel von den die Gesamtlichtverteilung erzeugenden Lichtquellen abgestrahlte Intensität in Abhängigkeit von dem Raumwinkel mit einer Variation variiert, die beispielsweise durch Abweichung von der erläuterten Maximalintensität angegeben werden kann, wobei diese Variation der Intensität der Gesamtlichtverteilung innerhalb des Hauptabstrahlwinkels mindestens das 1,5-Fache, insbesondere mindestens das Doppelte der Variation der Intensität beträgt, mit der der Leichtleiter das von ihm abgestrahlte Licht in den jeweiligen Raumwinkel abstrahlt, wobei der Hauptabstrahlwinkel innerhalb des oben erläuterten räumlichen Lichtverteilungsabstrahlwinkels der Gesamtlichtverteilung liegt, wobei der Hauptabstrahlwinkel in einer Ausführungsform mit dem Lichtverteilungsabstrahlwinkel identisch ist, in einer anderen Ausführungsform 50 % des Lichtverteilungsabstrahlwinkels, in jeder der drei Dimensionen, beträgt. Dabei ist zu berücksichtigen, dass die Gesamtlichtverteilung ein dreidimensionaler Körper ist, entsprechend auch die Lichtverteilung, mit der der Lichtleiter Licht abstrahlt. Indem die von dem Lichtleiter abgestrahlte Intensität wesentlich weniger in Abhängigkeit von dem Abstrahlwinkel variiert als die Intensität der Gesamtlichtverteilung, kann zum einen durch die Gesamtlichtverteilung eine besonders bevorzugte Beleuchtung eines bestimmten Bereichs durch die Leuchte gewährleistet sein, zum anderen eine angenehme Hintergrundbeleuchtung durch den Lichtleiter gewährleistet sein.

In einer Ausführungsform sind die den genannten Optikelementen zugeordneten Lichtquellen und der Lichtleiter dergestalt zueinander korrespondierend angeordnet, dass zwischen 2 % und 20 %, insbesondere zwischen 3 % und 15 %, einer Gesamtlichtintensität der Lichtverteilung des von der dem jeweiligen Optikelement, das an einer der Aussparungen angeordnet ist, zugeordneten Lichtquelle emittierten Lichts über den Lichteinkoppelabschnitt in den Lichtleiter gelangt. Dabei ist zu berücksichtigen, dass die Lichtverteilung, mit der eine jede Anordnung umfassend Lichtquelle und zugeordnetes Optikelement Licht abstrahlt, die Lichtverteilung ist, mit der das von der jeweiligen Lichtquelle ausgesandte Licht zum Lichteinkoppelabschnitt des Lichtleiters gelangen kann. Indem ein geringer, jedoch nicht unerheblicher Anteil der Gesamtintensität der Lichtverteilung der Lichtquellen, deren zugeordnetes Optikelement in einer der Aussparungen des Lichtleiters angeordnet ist, in den Lichtleiter gelangt, können diese Lichtquellen zum einen einen wesentlichen Teil ihres Lichts über das ihnen jeweils zugeordnete Optikelement ohne Interaktion mit dem Lichtleiter zur Abdeckung hin abstrahlen oder zumindest ohne zuvor erfolgte Einkopplung und anschließender Propagation in dem Lichtleiter zur Abdeckung hin abstrahlen, wohingegen der genannte Anteil in den Lichtleiter eingekoppelt werden und gezielt gemäß der Ausgestaltung des Lichtleiters von diesem abgestrahlt werden kann. Bevorzugt tritt mindestens 80 %, insbesondere mindestens 90 % dieses in den Lichtleiter gelangten Lichts anschließend aus zumindest einer der flächigen Außenseiten des Lichtleiters aus.

In einer Ausführungsform weist die Leuchte einen Geräteträger mit einer Montageseite auf, wobei die Lichtquellen und die Optikelemente an der Montageseite fixiert sind. Bevorzugt ist ferner der Lichtleiter an der Montageseite fixiert. Besonders bevorzugt ist der Lichtleiter und/oder sind die Optikelemente zur Fixierung an der Montageseite mit dem Geräteträger lösbar verrastet. Besonders bevorzugt ist durch die Fixierung des Lichtleiters an dem Geräteträger auch ein zwischen Lichtleiter und Montageseite angeordneter Reflektor, der insbesondere als Reflektorplatte ausgebildet ist, am Geräteträger fixiert, wobei insbesondere der Lichtleiter auf den Reflektor einen Anpressdruck zur Montageseite hin ausübt. Bevorzugt sind Reflektor und Lichtleiter und/oder Reflektor und Geräteträger miteinander verrastet. Bevorzugt sind die Optikelemente und der Lichtleiter miteinander verrastet. Durch die Verrastung kann eine gezielte Ausrichtung und Fixierung der jeweiligen Komponenten besonders einfach und vorteilhaft bereitgestellt sein. Bevorzugt ist der Geräteträger aus Metall hergestellt, insbesondere aus einem umgeformten Metallblech. Bevorzugt ist der Geräteträger einteilig ausgebildet. Bevorzugt gewährleistet der Geräteträger eine Abfuhr von Wärme von den Lichtquellen. In einer Ausführungsform ist der Lichtleiter zumindest abschnittsweise, insbesondere insgesamt, nach Art einer Platte ausgebildet, die mit ihrer flächigen Plattenseite zur Montageseite weisend angeordnet ist. Die flächige Plattenseite ist eine der flächigen Außenseiten des Lichtleiters. In einer Ausführungsform ist der Lichtleiter zumindest abschnittsweise, insbesondere insgesamt, nach Art einer Röhre ausgebildet, die mit einem offenen Röhrenende zur Montageseite weisend angeordnet ist. Bei der Ausgestaltung des Lichtleiters nach Art einer Röhre bildet der Lichtleiter den Mantel der Röhre aus, der den lichten Querschnitt der Röhre umgibt, so dass die Außenseite der Röhre bzw. ihres Mantels eine erste der flächigen Außenseiten des Lichtleiters ausbildet und die dem lichten Querschnitt der Röhre begrenzende Innenseite der Röhre bzw. ihres Mantels die zweite flächige Außenseite des Lichtleiters ausbildet. Die Ausbildung des Lichtleiters nach Art einer Platte oder nach Art einer Röhre kann eine besonders vorteilhafte und zweckmäßige Anordnung des Lichtleiters sowohl relativ zur Abdeckung als auch relativ zu zumindest einigen der Lichtquellen der Leuchte vereinfachen. Als besonders vorteilhaft hat sich herausgestellt, dass der Lichtleiter einen ersten Abschnitt aufweist, in dem er nach Art einer Platte ausgebildet ist, sowie einen zweiten Abschnitt, in dem er nach Art einer Röhre ausgebildet ist. Die beiden Abschnitte können durch jeweils separate Elemente des Lichtleiters oder integral in einem einteilig ausgebildeten Lichtleiter ausgebildet sein. In einer Ausführungsform ist der Lichtleiter zumindest abschnittsweise nach Art einer Platte ausgebildet, wobei in der Platte Aussparungen vorgesehen sind, in denen jeweils zumindest eines der Optikelemente angeordnet ist, denen jeweils eine der Lichtquellen der Leuchte wie erläutert zugeordnet ist. Die in der Platte vorgesehenen Aussparungen und die Anordnung der Optikelemente in den Aussparungen kann wie vorstehend erläutert vorgesehen sein. Besonders bevorzugt bedeckt der Lichtleiter, insbesondere sein nach Art einer Platte ausgebildeter Abschnitt bzw. der insgesamt nach Art einer Platte ausgebildete Lichtleiter, gemeinsam mit den Optikelementen mindestens 70 %, insbesondere mindestens 80 %, insbesondere mindestens 90 % der Montageseite des Geräteträgers, insbesondere bedeckt er gemeinsam mit den Optikelementen die Montageseite des Geräteträgers im Wesentlichen vollständig. Durch das Bedecken der Montageseite des Geräteträgers durch den Lichtleiter und die Optikelemente kann die Montageseite im Wesentlichen vollständig durch lichtabstrahlende Bereiche verdeckt sein, was für den visuellen Eindruck und/oder die Erfüllung der Beleuchtungsaufgabe der Leuchte besonders vorteilhaft sein kann. In einer Ausführungsform ragt der Lichtleiter über die Montageseite des Geräteträgers seitlich hinaus, insbesondere in sämtlichen horizontalen Richtungen, wobei die flächige Plattenseite horizontal verläuft. In einer Ausführungsform ist eine Reflektorplatte zwischen der Montageseite und dem Lichtleiter angeordnet. Besonders bevorzugt weist die Reflektorplatte Aussparungen auf, die zu den in dem Lichtleiter vorgesehenen Aussparungen fluchtend angeordnet sind, wobei sich die in den Aussparungen des Lichtleiters angeordneten Optikelemente auch innerhalb der in der Reflektorplatte vorgesehenen Aussparungen erstrecken. Durch das Vorsehen der Reflektorplatte kann auf besonders einfache Weise eine hohe Effizienz der Leuchte gewährleistet sein.

In einer Ausführungsform teilt sich das von sämtlichen Lichtquellen der Leuchte emittierte Licht in einen ersten und in einen zweiten Anteil auf. Erster und zweiter Anteil gemeinsam ergeben somit das gesamte Licht, und somit auch die Gesamtlichtintensität, das im Betriebszustand von sämtlichen Lichtquellen der Leuchte abgestrahlt wird. Bevorzugt gelangt nur der erste Anteil in den Lichtleiter und nur nach Propagation durch den Lichtleiter zur Abdeckung, wohingegen der zweite Anteil ausgehend von den Lichtquellen, die den zweiten Anteil emittieren, ausschließlich außerhalb des Lichtleiters propagiert und unter Durchquerung des Innenraums zur Innenseite der Abdeckung gelangt. Bei der entsprechenden Ausgestaltung der Leuchte und somit korrespondierenden Anordnung und Ausgestaltung von Lichtquellen, Optikelementen und Lichtleiter, kann gezielt ein erster Anteil in Interaktion mit dem Lichtleiter treten, so dass der Lichtleiter die Lichtverteilung beeinflusst, mit der dieser erste Anteil von der Leuchte bzw. ihrer Abdeckung in die Umgebung abgestrahlt wird, wohingegen der zweite Anteil ohne Interaktion mit dem Lichtleiter in seiner Lichtverteilung gezielt eingestellt werden kann. In einer Ausführungsform beträgt die Gesamtlichtintensität des ersten Anteils maximal 100 %, insbesondere maximal 70 %, insbesondere maximal 50 %, insbesondere maximal 30 %, insbesondere maximal 20 %, insbesondere maximal 10 % der Gesamtlichtintensität des zweiten Anteils und/oder mindestens 5 %, insbesondere mindestens 10 %, insbesondere mindestens 15 % der Gesamtlichtintensität des zweiten Anteils. Je geringer die Gesamtlichtintensität des zweiten Anteils relativ zum ersten Anteil ist, desto weniger beeinflusst der erste Anteil die Gesamtlichtverteilung des von der Leuchte ausgesandten Lichts, wobei das überschreiten eines Mindestwerts für den ersten Anteil den Vorteil bringt, dass die Aufhellung durch den Lichtleiter besonders wahrnehmbar ist. In einer Ausführungsform weist der erste Anteil eine geringere Veränderung seiner Intensität in Abhängigkeit von dem Abstrahlwinkel auf als der zweite Anteil. In einer Ausführungsform emittiert ausschließlich die Gruppe an Lichtquellen den zweiten Anteil. Somit wird der zweite Anteil nur von solchen Lichtquellen emittiert, die der Gruppe an Lichtquellen angehören und denen somit jeweils ein Optikelement zugeordnet ist. In einer Ausführungsform emittiert ausschließlich die Gruppe an Lichtquellen den ersten Anteil. Somit stellt die Gruppe an Lichtquellen sämtliche Lichtquellen der Leuchte bereit.

In einer Ausführungsform ist das in den Lichtleiter eingekoppelte Licht von zumindest einigen der Lichtquellen der Gruppe emittiert, wobei die diesen Lichtquellen der Gruppe zugeordneten Optikelemente das von den ihnen zugeordneten Lichtquellen emittierte Licht zum überwiegenden Anteil ausgehend von nur solchen Oberflächenabschnitten zur Abdeckung hin abstrahlen, die zwischen dem Lichtleiter und der Abdeckung angeordnet sind. Indem die Optikelemente zum überwiegenden Anteil Licht nur von ihren solchen Oberflächenabschnitten abstrahlen, die zwischen dem Lichtleiter und der Abdeckung angeordnet sind, kann der überwiegende Anteil des von Ihnen abgestrahlten Lichts ohne Interaktion mit dem Lichtleiter zur Abdeckung gelangen. In einer Ausführungsform strahlen sämtliche Optikelemente das von den ihnen zugeordneten Lichtquellen emittierte Licht zumindest überwiegend ausgehend von nur solchen Oberflächenabschnitten zur Abdeckung hin ab, die zwischen dem Lichtleiter und der Abdeckung angeordnet sind.

In einer Ausführungsform ist der Geräteträger nach Art einer Topfform ausgebildet. Somit weist der Geräteträger einen Topfboden und eine um den Topfboden umlaufende Topfwand auf. Die Topfwand und der Topfboden können jeweils Unterbrechungen aufweisen oder unterbrechungsfrei und somit durchgehend geschlossen ausgebildet sein. In einer Ausführungsform sind Topfwand und Topfboden in einem Bauteil einstückig integriert ausgebildet. In einer Ausführungsform ist die Topfwand durch ein erstes Bauteil und der Topfboden durch ein zweites Bauteil ausgebildet. Beispielsweise kann die Topfwand nach Art eines Hohlzylinders ausgebildet sein und der Topfboden nach Art einer Tragplatte ausgebildet sein, die die Montageseite des Geräteträgers ausbildet. Beispielsweise kann eine solche Tragplatte mittels Befestigungsmitteln an der Topfwand befestigbar sein. Die Topfform bietet allgemein den besonderen Vorteil, dass durch die Topfform beziehungsweise den Innenraum der Topfform ein Aufnahmevolumen bereitgestellt ist, in dem elektronische Komponenten, beispielsweise zumindest einige der Lichtquellen und/oder elektrische Zuleitungen zu den Lichtquellen und/oder ein Betriebsgerät und/oder zumindest einen Sensor und/oder zumindest ein Funkmodul aufgenommen werden können. Beispielsweise kann der Topfboden einen plattenartigen Aufnahmebereich aufweisen, an dem die Lichtquellen angeordnet sind. Beispielsweise kann der Topfboden durch einen von der Topfwand nach innen abragenden Montagebereich ausgebildet sein, an dem ein Montageelement befestigbar ist, an dem die Lichtquellen und insbesondere weitere elektronische Komponenten fixiert sind, wobei der Montagebereich in diesem Fall die Montageseite des Geräteträgers ausbildet und an der Montageseite das Montageelement mit den an ihm fixierten Lichtquellen angeordnet ist.

Die Lichtquellen sind an dem Topfboden angeordnet. Die Lichtquellen können beispielsweise an einer Außenseite oder einer Innenseite des Topfbodens angeordnet sein. Die Außenseite des Topfbodens weist von dem vom Topfboden und Topfwand umschlossenen Innenraum weg. Entsprechend begrenzt die Innenseite des Topfbodens ein von der Topfform eingeschlossenes Aufnahmevolumen. Besonders bevorzugt ist innerhalb der Topfform ein Betriebsgerät angeordnet, das zum Versorgen der Lichtquellen ausgebildet ist. In einer Ausführungsform weist die Leuchte einen Deckel auf, der die Topfform verschließt oder zumindest teilweise ausbildet. In einer Ausführungsform bildet der Deckel den Geräteträger und somit die Topfform aus, wobei die Lichtquellen an der Innenseite des Topfbodens angeordnet sind, die zum Innenraum der Leuchte weist. In einer Ausführungsform bildet der Deckel die Topfwand aus, wobei der Topfboden von einem an dem Deckel befestigten Montageelement ausgebildet ist, das die Montageseite des Geräteträgers ausbildet, wobei insbesondere der Deckel einen dem Topfboden gegenüberliegenden Verschlussabschnitt aufweisen kann, wobei Topfwand, Topfboden und Verschlussabschnitt gemeinsam ein Aufnahmevolumen zum Aufnehmen von elektronischen Komponenten der Leuchte definieren.

In einer Ausführungsform verläuft die Abdeckung von der Montageseite des Geräteträgers aus oder von dem bevorzugt vorgesehenen Deckel aus oder von einem an die Abdeckung angrenzenden Abschnitt eines an dem Geräteträger befestigten Lichtleiters aus bis zu einem von der Montageseite in einer Vertikalrichtung beabstandeten Befestigungskörper der Leuchte röhrenartig, wobei sie in den Innenraum der Leuchte horizontal umlaufend umschließt. Die Abdeckung kann sich in einer Ausführungsform über Montageseite bzw. Deckel und/oder Befestigungskörper hinaus erstrecken oder mit ihrer vertikalen Erstreckung auf einen Bereich zwischen Montageseite bzw. Deckel und Befestigungskörper beschränkt sein. Besonders bevorzugt ist die Abdeckung über ihre gesamte Erstreckung hinweg lichtdurchlässig. Besonders bevorzugt weist der Befestigungskörper einen hohlzylindrischen Mastaufsatzabschnitt auf. Der Mastaufsatzabschnitt ist wie im Stand der Technik üblich ausgebildet und dazu ausgebildet, auf einen Mastzopf eines Leuchtenmastes aufgesetzt zu werden. Allgemein bevorzugt ist die Abdeckung an einem vertikalen Ende mit einem Deckel der Leuchte verbunden und an dem gegenüberliegenden vertikalen Ende mit dem Befestigungskörper verbunden, wobei Deckel, Abdeckung und Befestigungskörper bevorzugt zueinander abgedichtet sind, so dass der Innenraum zur Umgebung hin abgedichtet ist. Allgemein bevorzugt erstreckt sich die Abdeckung von der Montageseite bis zum Befestigungskörper über eine Länge in Vertikalrichtung, die mindestens 15 cm, insbesondere mindestens 20 cm, insbesondere mindestens 30 cm beträgt. Allgemein bevorzugt weist die Abdeckung innerhalb ihrer vertikalen Erstreckung einen minimalen horizontalen Durchmesser auf, der mindestens 10 cm, insbesondere mindestens 15 cm beträgt.

In einer Ausführungsform weist die Leuchte eine weitere Gruppe an Lichtquellen auf, die in einer in dem Lichtleiter vorgesehenen Aufnahme angeordnet sind, wobei die Aufnahme zumindest einen Teil des Lichteinkoppelabschnitts des Lichleiters, insbesondere den Lichteinkoppelabschnitt des Lichtleiters ausbildet. Die Aufnahme kann als Aussparung in dem Lichtleiter ausgebildet sein. Die Aufnahme kann durch einen zwischen zwei voneinander beabstandeten Lichtleiterelementen des Lichtleiters vorgesehenen Abstand ausgebildet sein oder als Aussparung innerhalb eines einstückigen Lichtleiterelements des Lichtleiters bzw. innerhalb eines einstückig ausgebildeten Lichtleiters ausgebildet sein. In einer Ausführungsform ist die weitere Gruppe an Lichtquellen auf einem Trägerring angeordnet, der horizontal um eine Ringachse umläuft. Der Trägerring kann beispielsweise nach Art eines geschlossenen Dreiecks oder sonstigen Vielecks oder nach Art eines Kreisrings ausgebildet sein. Bevorzugt ist der Trägerring durch einen Abschnitt des Geräteträgers bzw. einen Geräteträgerabschnitt ausgebildet. Besonders bevorzugt gelangt im Betriebszustand ausschließlich von den Lichtquellen der weiteren Gruppe emittiertes Licht über den Lichteinkoppelabschnitt in den Lichtleiter, wohingegen das von den Lichtquellen der genannten Gruppe an Lichtquellen emittierte Licht außerhalb des Lichtleiters durch den Innenraum zur Abdeckung hin propagiert. Allgemein bevorzugt sind die Lichtquellen der weiteren Gruppe dergestalt angeordnet, dass sie Licht von dem Trägerring vertikal weg strahlen. Bevorzugt umgibt die Aufnahme den Trägerring auf Höhe der Lichtquellen an zumindest einem, insbesondere an beiden vertikalen Ende und somit an beiden in Vertikalrichtung weisenden Seiten des Trägerrings.

In einer Ausführungsform weist die Abdeckung eine Form nach Art einer Röhre mit einer vertikalen Röhrenlänge und einem horizontalen lichten Querschnitt auf, der einen maximalen horizontalen Durchmesser aufweist, wobei die Lichtleiter innerhalb der Röhre angeordnet ist und einen horizontalen Querschnitt mit einem maximalen Durchmesser aufweist, der mindestens 50 %, insbesondere mindestens 70 %, insbesondere mindestens 80 %, insbesondere mindestens 90 % des maximalen Durchmessers der Röhre beträgt, den die Röhre auf Höhe des Lichtleiters oder an ihrem zum Lichtleiter gewandten Röhrenende aufweist. Der maximale horizontale Durchmesser ist der Durchmesser in genau der horizontalen Richtung, in der die Röhre bzw. der Lichtleiter seine größte horizontale Erstreckung aufweist. Bei der Ausgestaltung der Röhre bzw. des Lichtleiters mit kreisrundem Querschnitt entspricht der maximale Durchmesser dem Durchmesser des Kreises. Indem der Lichtleiter einen maximalen Durchmesser aufweist, der einem wesentlichen Anteil des maximalen Durchmessers der Röhre an der vertikalen Stelle entspricht, an der der Lichtleiter angeordnet ist, füllt der Lichtleiter einen wesentlichen Anteil des lichten Querschnitts der Röhre in dem vertikalen Bereich, indem er in der Röhre angeordnet ist. Dies kann einen besonders vorteilhaften optischen Effekt mit sich bringen, da der lichte Querschnitt der Röhre zumindest zu einem wesentlichen Anteil als lichtabstrahlend wahrgenommen werden kann, wenn der Lichtleiter im Betriebszustand der Leuchte an seiner flächigen Außenseite Licht abstrahlt.

In einer Ausführungsform bildet der Lichtleiter eine röhrenartige Form aus, die innerhalb der Abdeckung über mindestens 20 %, insbesondere mindestens 30 %, insbesondere mindestens 50 %, insbesondere mindestens 80 %, insbesondere mindestens 90 % der Röhrenlänge der Abdeckung verläuft oder - in Ausführungsformen, in der der Lichtleiter mit einer seiner Außenseiten die Außenseite der Abdeckung ausbildet - die Abdeckung ausbildet. In einer Ausführungsform sind zumindest einige der Lichtquellen der Gruppe an Lichtquellen horizontal zwischen der von dem Lichtleiter ausgebildeten röhrenartigen Form und der Abdeckung angeordnet. In einer Ausführungsform sind sämtliche Lichtquellen horizontal innerhalb der von dem Lichtleiter ausgebildeten röhrenartigen Form angeordnet. Je nach Anordnung der genannten Lichtquellen horizontal innerhalb des Lichtleiters oder zwischen Abdeckung und Lichtleiter kann eine Beeinflussung der Lichtverteilung des von diesen Lichtquellen ausgesandten Lichts durch den Lichtleiter bewusst realisiert oder vermieden sein.

In einer Ausführungsform ist der Lichtleiter mehrteilig ausgebildet. Beispielsweise kann der Lichtleiter mehrere Kreisringabschnitte aufweisen, die in der Leuchte gemeinsam zu einem Kreisring zusammengesetzt sind, wobei zwischen den Kreisringabschnitten ein Spalt vorgesehen sein kann. Allgemein kann der Lichtleiter mehrere Lichtleiterelemente aufweisen, die bevorzugt unabhängig voneinander jeweils separat hergestellt sind. Bevorzugt weist der Lichtleiter zumindest ein erstes und ein zweites und insbesondere ein drittes Lichtleiterelement auf. In einer Ausführungsform sind die Lichtleiterelemente lösbar miteinander verbunden, beispielsweise mittels Verschraubung oder Verrastung, in einer Ausführungsform sind die Lichtleiterelemente unlösbar miteinander verbunden, beispielsweise mittels Verklebung oder Verschweißung. Beispielsweise kann zumindest eines oder können sämtliche Lichtleiterelemente jeweils durch mehrere Kreisringabschnitt ausgebildet sein oder alternativ einstückig hergestellt sein. In einer Ausführungsform weist der Lichtleiter ein erstes Lichtleiterelement auf, das einen plattenartigen Abschnitt aufweist, sowie ein zweites Lichtleiterelement, das einen röhrenartigen Abschnitt aufweist und/oder einen plattenartigen Abschnitt aufweist. Bevorzugt weist der Lichtleiter zwei Lichtleiterelemente auf, die jeweils einen plattenartigen Abschnitt aufweisen, die jedoch vertikal und/oder horizontal voneinander beabstandt sind, so dass ihre plattenartigen Abschnitte vertikal voneinander beabstandet sind, insbesondere um mindestens 20 % der vertikalen Gesamterstreckungslänge der Abdeckung, wobei insbesondere die plattenartigen Abschnitt mit ihren Plattenflächen horizontal verlaufen. In einer Ausführungsform sind die Lichtleiterelemente unmittelbar aneinander angrenzend angeordnet, so dass in einem der Lichtleiterelemente propagierendes Licht ohne wesentliche Störung in das andere Lichtleiterelement gelangen kann.

In einer Ausführungsform weist der Lichtleiter mehrere Lichtleiterelemente auf, wobei zumindest einige der Lichtleiterelemente mit ihren horizontalen Enden horizontal voneinander beabstandet sind und/oder wobei zumindest einige der Lichtleiterelemente mit ihren vertikalen Mitten vertikal voneinander beabstandet sind, insbesondere vertikal um mindestens 20 %, insbesondere mindestens 30 %, einer vertikalen Gesamterstreckungslänge der Abdeckung. Die Lichtleiterelemente können jeweils einteilig ausgebildet sein oder aus mehreren Teilelementen bestehen. Indem zumindest zwei der Lichtleiterelemente mit ihren horizontalen Enden horizontal voneinander beabstandet sind, können diese beiden Lichtleiterelemente horizontal voneinander beabstandete Flächenabschnitte der Lichtabstrahlseite des Lichtleiters ausbilden, wobei aufgrund der horizontalen Beabstandung jedes der Lichtleiterelemente gezielt zum Bereitstellen des ihm jeweils zugeordneten Flächenabschnitts der Lichtabstrahlseite und/oder einer gewünschten Abstrahlcharakteristik des von ihm ausgebildeten Flächenabschnitts der Lichtabstrahlseite ausgebildet sein kann. Durch das Vorsehen von zumindest zwei Lichtleitelementen, die jeweils eine vertikale Mitte aufweisen, wobei die vertikalen Mitten der beiden Lichtleiterelemente vertikal voneinander beabstandet sind, kann die Leuchte in verschiedenen vertikalen Bereichen jeweils gezielt eine andere Lichtabstrahlcharakteristik aufweisen. In einer Ausführungsform sind einige, insbesondere zumindest zwei, der Lichtleiterelemente sowohl mit ihren horizontalen Enden voneinander beabstandet, als auch mit ihren vertikalen Mitten voneinander beabstandet. In einer Ausführungsform sind mindestens zwei der Lichtleiterelemente vertikal voneinander beabstandet, sodass nicht nur ihre vertikalen Mitten, sondern auch ihre entlang der Vertikalrichtung zueinander gewandten vertikalen Enden voneinander beabstandet sind. Bei dem Vorsehen von zwei Lichtleiterelementen, deren horizontale Enden horizontal voneinander beabstandet sind, weisen diese horizontalen Enden der beiden verschiedenen Lichtleiterelemente entlang einer Horizontalrichtung, das heißt senkrecht zur Vertikalrichtung, zueinander und sind voneinander horizontal beabstandet. Beispielsweise können die beiden Lichtleiterelemente jeweils plattenartig ausgestaltet sein, wobei das zweite Lichtleiterelement nach Art einer Kreisscheibe oder nach Art eines Kreisrings ausgebildet sein kann. In einer Ausführungsform ist das erste Lichtleiterelement um eine vertikale Mittenachse der Leuchte um das zweite Lichtleiterelement umlaufend ausgebildet ist. Beispielsweise kann das erste Lichtleiterelement nach Art eines Rings, insbesondere Kreisrings, ausgebildet sein. Erstes und zweites Lichtleiterelement können in einer selben horizontalen Ebene oder vertikal versetzt zueinander angeordnet sein. Bevorzugt bilden erstes und zweites Lichtleiterelement jeweils einen Flächenabschnitt der Lichtabstrahlseite des Lichtleiters aus, wobei die Flächenabschnitte in einer selben horizontalen Ebene liegen. Allgemein kann bei der erläuterten horizontalen Beabstandung der horizontalen Enden von zwei Lichtleiterelementen vorgesehen sein, dass das erste Lichtleiterelement eine Aussparung aufweist, in der das zweite Lichtleiterelement angeordnet ist, wobei das erste Lichtleiterelement das zweite Lichtleiterelement um eine vertikale Mittenachse der Leuchte umlaufend umschließt. Die vertikale Mittenachse bezeichnet allgemein eine Achse in Vertikalrichtung, die durch eine horizontale Mitte der Leuchte verläuft.

In einer Ausführungsform ist jedem der Lichtleiterelemente eine jeweils andere Teilmenge der Lichtquellen zugeordnet. Hierdurch kann vorteilhaft gewährleistet sein, dass eine jeweils andere Teilmenge an Lichtquellen zum Einkoppeln in die verschiedenen Lichtleiterelemente vorgesehen ist, sodass die jeweilige Teilmenge an Lichtquellen gezielt relativ zu dem ihnen zugeordneten Lichtleiterelement angeordnet werden kann, sodass eine besonders gezielte Einkopplung von Licht in das jeweilige Lichtleiterelement und eine gezielte Abstrahlung des eingekoppelten Lichts von dem jeweiligen Lichtleiterelement, das heißt von dem Flächenabschnitt der Lichtabstrahlseite des Lichtleiters, den das jeweilige Lichtleiterelement ausbildet, gewährleistet sein kann. Als besonders vorteilhaft hat sich herausgestellt, dass jede Teilmenge der Lichtquellen nur zum Einkoppeln in das ihnen jeweils zugeordnete Lichtleiterelement ausgebildet und hierzu an dem Lichteinkoppelabschnitt des ihm zugeordneten Lichtleiterelements angeordnet ist. Jedes Lichtleiterelement weist einen Lichteinkoppelabschnitt auf, und die Lichteinkoppelabschnitte der Lichtleiterelemente bilden jeweils einen Teil des Lichteinkoppelabschnitts des Lichtleiters. Bei dieser besonders vorteilhaften Ausführungsform koppeln die Lichtquellen einer jeden Teilmenge somit nur in das ihnen zugeordnete Lichtleiterelement Licht ein, was für die Vorgabe des eingekoppelten Lichts und der Abstrahlung des eingekoppelten Lichts besonders vorteilhaft sein kann. Allgemein bevorzugt sind die unterschiedlichen Teilmengen an Lichtquellen voneinander unabhängig ansteuerbar. Allgemein bevorzugt weist die Leuchte ein Betriebsgerät auf, das zum voneinander unabhängigen Ansteuern der verschiedenen Teilmengen an Lichtquellen ausgebildet ist, oder weist die Leuchte mehrere Betriebsgeräte auf, die einer jeweils anderen Teilmenge an Lichtquellen zugeordnet sind und die jeweils zum Ansteuern der ihnen zugeordneten Teilmenge unabhängig von einer Ansteuerung der anderen Teilmengen ausgebildet sind. Allgemein bevorzugt sind die verschiedenen Teilmengen an Lichtquellen jeweils zum Abstrahlen eines Lichts mit einem Wellenlängenspektrum ausgebildet, wobei sich die Wellenlängenspektren der verschiedenen Teilmengen in ihrer Breite unterscheiden. Die Breite eines Wellenlängenspektrums ist durch die Halbwertsbreite definiert, d.h. durch die Breite (in nm) des Wellenlängenbereichs definiert, über den hinweg die Lichtquellen mindestens 50 % ihrer Maximalintensität abtrahlen, wobei die Maximalintensität das Maximum des wellenlängenabhängigen Intensitätsverlaufs ist. Bevorzugt ist eine der Teilmengen nur zum Abstrahlen von weißem Licht, d.h. warmweißen und/oder kaltweißen Licht, und eine andere der Teilmengen zum Abstrahlen von RGBW-Licht ausgebildet. Bevorzugt ist dem Lichtleiterelement, das den Überkragungsabschnitt ausbildet bzw. das sich horizontal über das andere Lichtleiterelement hinaus erstreckt (z.B. das vorliegend erläuterte erste Lichtleiterelement), die Teilmenge zugeordnet, die Licht über ein breiteres Wellenlängenspektrum abstrahlt als die Teilmenge, die dem anderen Lichtleiterelement (z.B. dem vorliegend erläuterten zweiten Lichtleiterelement) zugeordnet ist. Dadurch kann aus der Mitte der Leuchte eine weiße Ausleuchtung erfolgen, vom Rand der Leuchte jedoch eine angenehme und insbesondere situativ angepasste Beleuchtung bereitgestellt werden. Allgemein bevorzugt sind zumindest zwei Teilmengen vorgesehen, die einem jeweils anderen Lichtleiterelement zugeordnet sind, wobei die Lichtquellen der erste Teilmenge mit ihrer Hauptabstrahlrichtung um mindestens 45°, insbesondere um 90° versetzt zu der Hauptabstrahlrichtung der zweiten Teilmenge ausgerichtet sind. Beispielsweise können die Lichtquellen der ersten Teilmenge mit ihrer Hauptabstrahlrichtung vertikal, z.B. nach unten, abstrahlen, die Lichtquellen der zweiten Teilmenge mit ihrer Hauptabstrahlrichtung horizontal, z.B. seitlich von der vertikalen Mittenachse der Leuchte weg, abstrahlen. Die Hauptabstrahlrichtung ist für den Fachmann bekanntermaßen für jede LED definiert. Bevorzugt sind zumindest zwei, insbesondere die beiden vorliegend erläuterten, Teilmengen an einem selben Geräteträger fixiert. Beispielsweise kann eine der Teilmengen an einem Montageabschnitt des Geräteträgers fixiert angeordnet sein, eine andere der Teilmengen an einem an dem Montageabschnitt lösbar fixierten Geräteträgerabschnitt montiert sein. Hierdurch kann besonders einfach das Vorsehen der anderen Teilmenge in einer Leuchte optional gestaltet werden bzw. bei Bedarf bei Herstellung der Leuchte einfach realisiert werden. Allgemein bevorzugt ist eine der Teilmengen zum horizontalen Abstrahlen auf einen Lichteinkoppelabschnitt eines ihr zugeordneten Lichtleiterelements ausgebildet, wobei diese Teilmenge nach unten hin durch eine Abschattungseinrichtung abgeschattet, d.h. verdeckt ist, wodurch undefinierte Streustrahlung dieser Teilmenge an Lichtquellen nach unten verhindert werden kann. Beispielsweise kann die Abschattungseinrichtung durch den Geräteträger ausgebildet sein.

Allgemein bevorzugt sind die Lichtleiterelemente voneinander beabstandet (horizontal und/oder vertikal), wobei jedem der Lichtleiterelemente eine jeweils andere Teilmenge an Lichtquellen zugeordnet ist und aufgrund des Abstands zwischen den Lichtleiterelementen sichergestellt ist, dass von der dem jeweiligen Lichtleiterelement zugeordneten Teilmenge an Lichtquellen abgestrahltes Licht, dass in das jeweilige Lichtleiterelement eingekoppelt worden ist, nicht ohne weiteres in ein anderes der Lichtleiterelemente gelangen kann. Beispielsweise kann eine erste Teilmenge an Lichtquellen, die einem ersten Lichtleiterelement zugeordnet ist, zumindest abschnittsweise innerhalb zumindest einer Aussparung des ersten Lichtleiterelements angeordnet sein, wohingegen eine zweite Teilmenge an Lichtquellen, die einem zweiten Lichtleiterelement zugeordnet ist, das von dem ersten Lichtleiterelement beabstandet ist, an dem zweiten Lichtleiterelement angeordnet ist, beispielsweise an einem horizontalen und/oder vertikalen Ende des zweiten Lichtleiterelements und/oder in zumindest einer Aussparung des zweiten Lichtleiterelements. Beispielsweise kann die zweite Teilmenge an Lichtquellen an einem solchen Ende des zweiten Lichtleiterelements angeordnet sein, das zu einem von ihm beabstandeten Ende des ersten Lichtleiterelements hin weist oder das von diesem Ende des ersten Lichtleiterelements weg weist. Beispielsweise kann die erste Teilmenge an Lichtquellen an einem solchen Ende des ersten Lichtleiterelements angeordnet sein, das zu einem von ihm beabstandeten Ende des zweiten Lichtleiterelements hin weist oder das von diesem Ende des zweiten Lichtleiterelements weg weist. Beispielsweise kann das erste Lichtleiterelement eine Aussparung aufweisen, in der die zweite Teilmenge an Lichtquellen und das zweite Lichtleiterelement angeordnet sind.

In einer Ausführungsform weist der Lichtleiter eine horizontale Erstreckung auf, die mindestens 130 %, insbesondere mindestens 150 %, insbesondere mindestens 200 %, insbesondere mindestens 300 % einer über ihre vertikale Erstreckung hinweg gemittelten horizontalen Erstreckung der Abdeckung beträgt. Beispielsweise kann die Abdeckung zylinderartig ausgebildet sein und über ihre vertikale Erstreckung hinweg einen selben Querschnitt aufweisen, sodass die gemittelte horizontale Erstreckung den Durchmesser der Abdeckung entspricht. Beispielsweise kann die Abdeckung trompetenartig oder nach Art von entlang der Vertikalrichtung hintereinander angeordneten, sich in ihren Durchmessern unterscheidenden Zylinderabschnitten ausgebildet sein, sodass die gemittelte horizontale Erstreckung einen über die vertikale Erstreckung der Abdeckung gemittelten Wert der horizontalen Erstreckung darstellt. Die horizontale Erstreckung ist für jede Vertikalposition durch den maximalen Abstand von zwei entlang einer Horizontalrichtung einander gegenüberliegenden Enden des jeweiligen Bauteils definiert, wobei für jede Vertikalposition die horizontale Achse gewählt wird, entlang derer das Bauteil seine maximale horizontale Erstreckung aufweist. Indem der Lichtleiter eine im Vergleich zur Abdeckung wie erläutert größere horizontale Erstreckung aufweist, kann der Lichtleiter eine im Vergleich zur Abdeckung besonders große horizontale Leuchtfläche bereitstellen, was zu einer Entblendung und/oder dezenten Abstrahlwirkung der gesamten Leuchte besonders vorteilhaft beitragen kann.

In einer Ausführungsform weist die Abdeckung einen horizontalen Querschnitt senkrecht zu einer vertikalen Mittenachse der Leuchte auf, der durch ein um die Mittenachse umlaufendes horizontales Ende der Abdeckung begrenzt ist. In einer Ausführungsform, in der die Abdeckung zylindrisch ausgebildet ist, verändert sich der Querschnitt entlang der vertikalen Erstreckung der Abdeckung nicht. In anderen Ausführungsformen kann sich der Querschnitt entlang der vertikalen Erstreckung der Abdeckung verändern. Bevorzugt weist der Lichtleiter einen Überkragungsabschnitt auf, wobei sich die Abdeckung mit einem Vertikalabschnitt ihrer vertikalen Erstreckung, der mindestens 80 %, insbesondere mindestens 90 % ihrer vertikalen Gesamterstreckungslänge ausbildet, an nur einer vertikalen Seite des Überkragungsabschnitts erstreckt und wobei der Lichtleiter um eine vertikale Mittenachse der Leuchte umlaufend horizontal über diesen Vertikalabschnitt der Abdeckung vorsteht. Beispielsweise kann ein Vertikalabschnitt der Abdeckung vertikal unterhalb des Überkragungsabschnitts des Lichtleiters angeordnet sein, wobei insbesondere der Lichtleiter dazu ausgebildet ist, mit dem Überkragungsabschnitt Licht im Wesentlichen nach unten abzustrahlen, insbesondere ausschließlich nach unten und seitlich, jedoch nicht nach oben abzustrahlen. Bevorzugt wird im Betriebszustand der Leuchte von der Außenseite der Abdeckung ausschließlich innerhalb des Vertikalabschnitts der Abdeckung Licht in die Umgebung der Leuchte abgestrahlt. Indem die Abdeckung mit zumindest einem wesentlichen Anteil ihrer vertikalen Erstreckung an nur einer Seite des Überkragungsabschnitts des Lichtleiters angeordnet ist, kann der Überkragungsabschnitt eine vordachartige Gestalt ausbilden, die für einen Betrachter gut sichtbar ist und zum angenehmen Ausleuchten besonders geeignet ist. Beispielsweise kann der Überkragungsabschnitt durch ein Lichtleiterelement des Lichtleiters ausgebildet sein. Bevorzugt ist dieses Lichtleiterelement nach Art eines Rings, insbesondere Kreisrings, oder nach Art einer Scheibe, insbesondere Kreisscheibe, oder nach Art einer Röhre mit Flansch ausgebildet, wobei der Flansch den Überkragungsabschnitt ausbildet. In einer Ausführungsform ist der Vertikalabschnitt der Abdeckung nach Art einer Röhre, insbesondere nach Art einer zylindrischen Röhre, ausgebildet, wobei der Überkragungsabschnitt vordachartig horizontal über die Röhre vorsteht. Bevorzugt steht der Überkragungsabschnitt um mindestens 30 %, insbesondere mindestens 50 %, eines mittleren Durchmessers des Vertikalabschnitts horizontal über diesen vor, wobei der mittlere Durchmesser ein Durchmesser des horizontalen Querschnitts der Abdeckung ist.

In einer Ausführungsform verläuft die Außenseite der Abdeckung innerhalb eines vertikalen Endbereichs der Abdeckung, mit dem sie an den Befestigungskörper vertikal angrenzt, zur Vertikalrichtung abgewinkelt, wodurch die Abdeckung besonders vorteilhaft zum Abstrahlen von Licht nach unten innerhalb des Endbereichs ausgebildet ist. Bevorzugt ist die Außenseite innerhalb des Endbereichs um mindestens 30°, insbesondere mindestens 45°, insbesondere mindestens 60°, insbesondere um 90° zur Vertikalrichtung abgewinkelt. Durch die Abwinklung kann gewährleistet sein, dass im Endbereich von der Außenseite der Abdeckung Licht mit einer gemittelten Abstrahlrichtung abgestrahlt wird, die einen Winkel von weniger als 60°, insbesondere weniger als 45° zur Vertikalrichtung aufweist.

In einer Ausführungsform weist die Leuchte mehrere Lichtabstrahlbereiche auf, insbesondere zumindest einen ersten und einen zweiten Lichtabstrahlbereich, insbesondere zumindest einen ersten, einen zweiten und einen dritten Lichtabstrahlbereich. Die Lichtabstrahlbereiche der Leuchte sind vertikal untereinander angeordnet. Der erste Lichtabstrahlbereich ist oberhalb des zweiten Lichtabstrahlbereichs angeordnet, steht horizontal über den zweiten Lichtabstrahlbereich vor und ist zum Abstrahlen von Licht mit einer ersten gemittelten Abstrahlrichtung ausgebildet. Der zweite Lichtabstrahlbereich ist ausschließlich unterhalb des ersten Lichtabstrahlbereich angeordnet und zum Abstrahlen von Licht mit einer zweiten gemittelten Abstrahlrichtung ausgebildet. Bei dem Vorsehen von beispielsweise einem dritten Lichtabstrahlbereich zusätzlich zum ersten und zweiten Lichtabstrahlbereich ist der dritte Lichtabstrahlbereich ausschließlich unterhalb des zweiten Lichtabstrahlbereichs angeordnet und zum Abstrahlen von Licht mit einer dritten gemittelten Abstrahlrichtung ausgebildet. Die Lichtabstrahlbereiche können beispielsweise als jeweils anderer Flächenabschnitt der Außenseite der Abdeckung ausgebildet sein. Bevorzugt ist der erste Lichtabstrahlbereich dergestalt relativ zu dem Lichtleiter angeordnet, dass in Betriebszustand der Leuchte zumindest der überwiegende Anteil des Lichts, das von dem ersten Lichtabstrahlbereich in die Umgebung der Leuchte abgestrahlt wird, von dem Lichtleiter abgestrahltes Licht ist. Bevorzugt wird von dem ersten Lichtabstrahlbereich ausschließlich solches Licht in die Umgebung abgestrahlt, das zuvor in den Lichtleiter eingekoppelt worden ist und von diesem abgestrahlt worden ist. Bevorzugt ist dem ersten Lichtabstrahlbereich ein erstes Lichtleiterelement des Lichtleiters zugeordnet, wobei im Betriebszustand der Leuchte der erste Abstrahlbereich zumindest überwiegend, insbesondere ausschließlich, Licht abstrahlt, das von dem ersten Lichtleiterelement abgestrahltes Licht ist. Bevorzugt ist dem dritten Lichtabstrahlbereich ein anderes (beispielsweise zweites oder drittes) Lichtleiterelement des Lichtleiters zugeordnet, wobei im Betriebszustand der Leuchte der dritte Lichtabstrahlbereich zumindest überwiegend, insbesondere ausschließlich, solches Licht in die Umgebung der Leuchte abstrahlt, das von dem anderen Lichtleiterelement abgestrahltes Licht ist. Beispielsweise kann dem ersten Lichtabstrahlbereich der in vorteilhaften, vorliegend erläuterten Ausführungsformen vorgesehene Überkragungsabschnitt des Lichtleiters zugeordnet sein, wobei der erste Lichtabstrahlbereich zumindest überwiegend, insbesondere ausschließlich, solches Licht in die Umgebung der Leuchte im Betriebszustand der Leuchte abstrahlt, das von dem Überkragungsabschnitt abgestrahltes Licht ist. In einer Ausführungsform weist die erste gemittelte Abstrahlrichtung einen kleineren Winkel zur Vertikalrichtung auf als die zweite gemittelte Abstrahlrichtung. In einer Ausführungsform weist die dritte gemittelte Abstrahlrichtung einen kleineren Winkel zur Vertikalrichtung auf als die zweite gemittelte Abstrahlrichtung. In einer Ausführungsform weisen erste und dritte gemittelte Abstrahlrichtung einen kleineren Winkel zur Vertikalrichtung auf als die zweite gemittelte Abstrahlrichtung. In einer Ausführungsform ist zumindest ein überwiegender Anteil des im Betriebszustand der Leuchte von dem ersten und/oder dem dritten Lichtabstrahlbereich in die Umgebung der Leuchte abgestrahlten Lichts von dem Lichtleiter abgestrahltes Licht. In einer Ausführungsform weist der zweite Lichtabstrahlbereich eine vertikale Erstreckungslänge auf, die ein Vielfaches, insbesondere zumindest das dreifache, insbesondere zumindest das fünffache, insbesondere zumindest das zehnfache, einer vertikalen Erstreckungslänge des ersten Lichtabstrahlbereichs beträgt und/oder einer vertikalen Erstreckungslänge des dritten Lichtabstrahlbereichs beträgt und/oder der Summe der vertikalen Erstreckungslänge des ersten und des dritten Lichtabstrahlbereichs beträgt. Bevorzugt beträgt die vertikale Erstreckungslänge des zweiten Lichtabstrahlbereichs mindestens 50 %, insbesondere mindestens 70 % der vertikalen Gesamterstreckungslänge der Abdeckung. In einer Ausführungsform mit dem Betriebszustand der Leuchte über den zweiten Lichtabstrahlbereich mindestens 50 %, insbesondere mindestens 70 % des gesamten von der Leuchte in die Umgebung abgestrahlten Lichts in die Umgebung abgestrahlt.

Die Erfindung betrifft ferner ein Set zur Realisierung einer erfindungsgemäßen Leuchte. In einer Ausführungsform weist das Set mehrere unterschiedliche Lichtleiter, die sich in ihren horizontalen Außenabmessungen unterscheiden, sowie mehrere identische Optikelemente auf. Die Leuchte ist mittels einer Kombination von jedem einzelnen der unterschiedlichen Lichtleiter jeweils mit den identisch ausgebildeten Optikelementen realisierbar. In einer Ausführungsform weist das Set mehrere unterschiedliche Optikelemente auf, die sich in ihren optisch lenkenden Eigenschaften unterscheiden, sowie einen Lichtleiter, wobei die Leuchte durch Kombination von jedem einzelnen der unterschiedlichen Optikelemente jeweils mit dem einen Lichtleiter realisierbar ist. Die Ausführungsformen können besonders vorteilhaft miteinander kombiniert werden, so dass genau einer der Lichtleiter mehreren unterschiedlichen Optikelementen zugeordnet ist, mit denen er jeweils kombinierbar ist, und mehrere der Lichtleiter genau einer Art identischen Optikelementen zugeordnet sind, mit denen sie jeweils kombinierbar sind. Besonders bevorzugt weist das Set mehrere unterschiedliche Lichtleiter und mehrere unterschiedliche Optikelemente auf, wobei jeder dieser Lichtleiter mehreren unterschiedlichen Optikelementen des Sets zugeordnet ist, mit denen er jeweils kombinierbar ist, so dass entsprechend mehrere unterschiedliche Optikelemente jeweils sämtlichen der unterschiedlichen Lichtleiter zugeordnet und mit diesen jeweils kombinierbar sind, wobei sich die Kombinierbarkeit selbstverständlich auf die Realisierbarkeit einer Leuchte bezieht. Dabei ist mittels des Sets eine Anordnung umfassend Optikelemente und Lichtleiter realisierbar, wobei die Optikelemente dieser Anordnung und der Lichtleiter dieser Anordnung bei der Realisierung einer Leuchte den Lichtleiter und die Optikelemente der Leuchte ausbilden. Die optisch lenkenden Eigenschaften der Optikelemente sind für die Lichtverteilung verantwortlich, mit der das Licht der ihnen jeweils zugeordneten Lichtquelle von dem jeweiligen Optikelement abgestrahlt wird. Zur Realisierung der Leuchte sind selbstverständlich weitere Komponente erforderlich, wie etwa die Abdeckung der Leuchte, Lichtquellen, ein Betriebsgerät, insbesondere ein Geräteträger, etc. Das erfindungsgemäße Set zeichnet sich in vorteilhaften Ausführungsformendurch die besondere Eigenschaft aus, dass mehrere identische und insbesondere mehrere unterschiedliche Optikelemente bereitgestellt werden und mehrere unterschiedliche Lichtleiter bereitgestellt werden können und dass durch beliebige Kombination von genau einem der unterschiedlichen Lichtleiter mit einer Auswahl von bestimmten der unterschiedlichen Optikelemente eine Anordnung bestehend aus Lichtleiter und Optikelementen hergestellt werden kann, die zur Realisierung einer erfindungsgemäßen Leuchte dergestalt verwendet werden kann, dass der Lichtleiter und die Optikelemente der Anordnung den Lichtleiter und die Optikelemente hergestellten Leuchte ausbilden.

Die Erfindung betrifft ferner ein Verfahren zum Beleuchten einer Umgebung mit einer Leuchte, die einen Lichtleiter umfasst. Von einer Abdeckung der Leuchte aus wird Licht in die Umgebung abgestrahlt, das von Lichtquellen der Leuchte emittiert wird. Bei dem erfindungsgemäßen Verfahren wird ein überwiegender Teil des Lichts von den Lichtquellen aus durch ein diesen jeweils zugeordnetes Optikelement hindurch gestrahlt und anschließend durch die Abdeckung abgestrahlt, ohne dass es zuvor innerhalb des Lichtleiters propagiert ist. Somit wird ein überwiegender Teil des Lichts von den Lichtquellen aus entfernt von dem Lichtleiter zur Abdeckung gestrahlt und von dieser in die Umgebung ausgestrahlt. Der übrige Teil des Lichts wird erst dann durch die Abdeckung hindurch abgestrahlt, nachdem es durch den Lichtleiter hindurch propagiert ist.

Die vorliegend beschriebenen verschiedenen erfindungsgemäßen Lösungen und ihre Ausführungsformen können besonders vorteilhaft miteinander kombiniert sein. Insbesondere können Merkmale, die zu Ausführungsformen von einer erfindungsgemäßen Lösung offenbart sind, in Ausführungsformen einer anderen offenbarten erfindungsgemäßen Lösung vorgesehen sein. Sämtliche erfindungsgemäße Ausführungsformen können insbesondere weitere Merkmale aufweisen, die vorliegend im Zusammenhang mit gattungsgemäßen Leuchten beschrieben sind.

Die Erfindung wird nachfolgend unter Bezugnahme auf neun Figuren anhand von Ausführungsbeispielen näher erläutert.

Es zeigen:
- Figur 1:: in einer schematischen Prinzipdarstellung eine Außenansicht einer Ausführungsform einer erfindungsgemäßen Leuchte;
- Figur 2:: in verschiedenen schematischen Prinzipdarstellungen Ansichten auf einen Schnitt durch die Ausführungsform gemäß Figur 1;
- Figur 3:: in verschiedenen schematischen Prinzipdarstellungen Komponenten der Ausführungsform gemäß Figur 1;
- Figur 4:: in verschiedenen schematischen Prinzipdarstellungen Komponenten der Ausführungsform gemäß Figur 1;
- Figur 5:: in verschiedenen schematischen Prinzipdarstellungen Ansichten einer weiteren Ausführungsform einer erfindungsgemäßen Leuchte;
- Figur 6:: in einer schematischen Prinzipdarstellung Bestandteile der Ausführungsform gemäß Figur 5;
- Figur 7:: eine Ansicht auf einen Ausschnitt einer weiteren Ausführungsform einer erfindungsgemäßen Leuchte;
- Figur 8:: eine Ansicht auf einen Ausschnitt einer weiteren Ausführungsform einer erfindungsgemäßen Leuchte;
- Figur 9:: eine Ansicht auf einen Ausschnitt einer weiteren Ausführungsform einer erfindungsgemäßen Leuchte;
- Figur 10:: In verschiedenen schematischen Prinzipdarstellungen analoge Ansichten auf Komponenten verschiedener Ausführungsformen;
- Figur 11:: In einer schematischen Prinzipdarstellung eine Seitenansicht auf einen Schnitt einer weiteren Ausführungsform einer erfindungsgemäßen Leuchte;
- Figur 12:: In verschiedenen schematischen Prinzipdarstellungen analoge Ansichten auf Komponenten unterschiedlicher Ausführungsformen;
- Figur 13:: In verschiedenen schematischen Prinzipdarstellungen analoge Schnittansichten auf Komponenten unterschiedlicher Ausführungsformen;
- Figur 14:: In einer schematischen Prinzipdarstellung eine Seitenansicht auf einen Schnitt durch eine weitere Ausführungsform einer erfindungsgemäßen Leuchte;
- Figur 15:: In einer schematischen Prinzipdarstellung eine Seitenansicht auf einen Schnitt durch eine weitere Ausführungsform einer erfindungsgemäßen Leuchte;
- Figur 16:: In einer schematischen Prinzipdarstellung die Abdeckung einer Ausführungsform einer erfindungsgemäßen Leuchte.

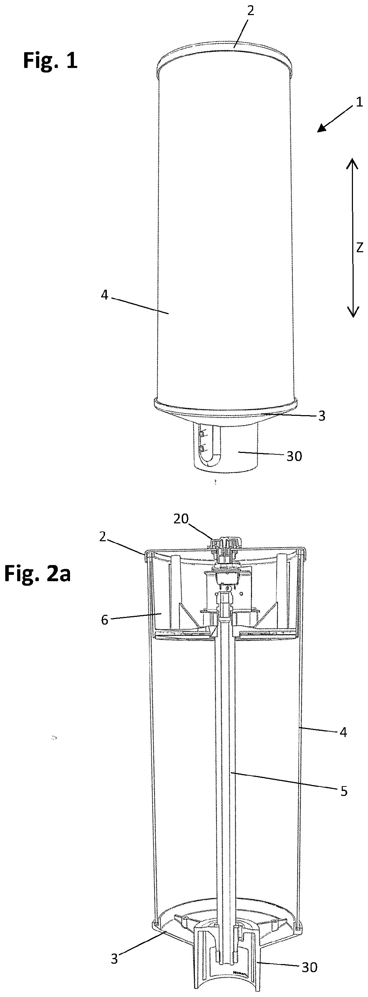

In den Figuren 1 bis 4 ist eine Ausführungsform einer erfindungsgemäßen Leuchte 1 anhand von schematischen Prinzipdarstellungen erläutert. Figur 1 zeigt eine Außenansicht der Leuchte 1. Aus Figur 1 ist zu erkennen, dass die Leuchte 1 an ihrem vertikal oberen Ende einen Deckel 2 aufweist und an ihrem vertikal unteren Ende einen Befestigungskörper 3 aufweist, wobei zwischen dem Deckel 2 und dem Befestigungskörper 3 eine röhrenartige Abdeckung 4 vorgesehen ist, die den Deckel 2 mit dem Befestigungskörper 3 verbindet, was erfindungsgemäß allgemein vorteilhaft ist. Die Abdeckung 4 umschließt einen Innenraum der Leuchte 1 horizontal und ist lichtdurchlässig, so dass in dem Innenraum zur Abdeckung 4 hin ausgesandtes Licht durch die Abdeckung 4 hindurchtreten kann und von deren Außenseite in eine Umgebung der Leuchte 1 abgegeben werden kann. Die röhrenartige Form der Abdeckung 4 ist vorliegend eine Form nach Art eines Hohlzylinders. An dem unteren Ende des Befestigungskörpers 3 ist ein hohlzylindrischer Mastaufsatzabschnitt 30 vorgesehen, mittels dessen die Leuchte 1 auf einen zylindrischen Mastzopf eines Leuchtenmastes aufgesetzt werden kann. Die erfindungsgemäße Leuchte 1 ist allgemein vorteilhaft als Außenleuchte ausgebildet, wobei der Deckel 2, die Abdeckung 4 und der Befestigungskörper 3 zueinander abgedichtet sind, wodurch ein abgedichteter Innenraum geschaffen ist.

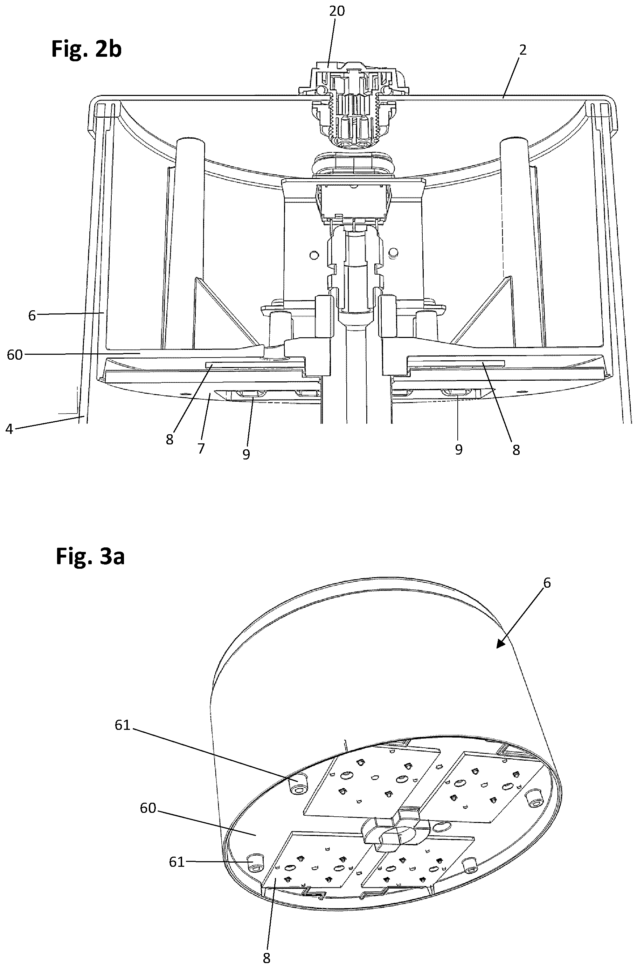

In Figur 2 umfassend die Figuren 2a, und 2b ist eine Ansicht auf einen Schnitt durch die Leuchte 1 gemäß Figur 1 dargestellt, damit Bestandteile der Leuchte 1 erkennbar sind. In Figur 2b ist eine vergrößerte Darstellung des obersten Abschnitts der Leuchte 1 der Querschnittsansicht gemäß Figur 2a dargestellt. Die Leuchte 1 weist einen Geräteträger 6 auf, der nach Art einer Topfform ausgebildet ist. An der Außenseite des Topfbodens 60 der Topfform sind Platinen 8 mit LED-Lichtquellen sowie Optikelemente 9 und ein Lichtleiter 7 angeordnet. Der Geräteträger 6 ist durch einen Träger 5 mit dem Befestigungskörper 3 verbunden und relativ zu diesem fixiert, wobei der Geräteträger 6 in Vertikalrichtung von dem Befestigungskörper 3 beabstandet gehalten ist. Die entsprechende Verbindung und Anordnung von geräteträger 6 und Befestigungskörper 3 relativ zueinander mittels eines Trägers 5 ist erfindungsgemäß allgemein vorteilhaft. Der Träger 5 der vorliegenden Ausführungsform weist, erfindungsgemäß allgemein vorteilhaft, einen durchgehenden Kanal auf, durch den hindurch ein elektrischer Leiter ausgehend von einem Leuchtenmast in die Topfform des Geräteträgers 6 geführt werden kann, wobei in der Topfform ein nicht dargestelltes Betriebsgerät angeordnet ist, das an solches Versorgungskabel angeschlossen werden kann und das zum Versorgen der Lichtquellen der Platinen 8 ausgebildet ist. Der Deckel 2 ist abdichtend mit der Oberseite des Geräteträgers 6 verbunden und verschließt dabei die Topfform des Geräteträgers 6, wobei in dem Deckel eine elektrische Schnittstelle 20 vorgesehen ist, mittels derer ein an der Außenseite des Deckels vorgesehener Sensor, beispielsweise eine Kamera oder ein Umgebungssensor, oder anderes elektronische Funktionselement, beispielsweise ein WLAN-Modul, lösbar angeschlossen und mit dem Betriebsgerät verbunden werden kann.

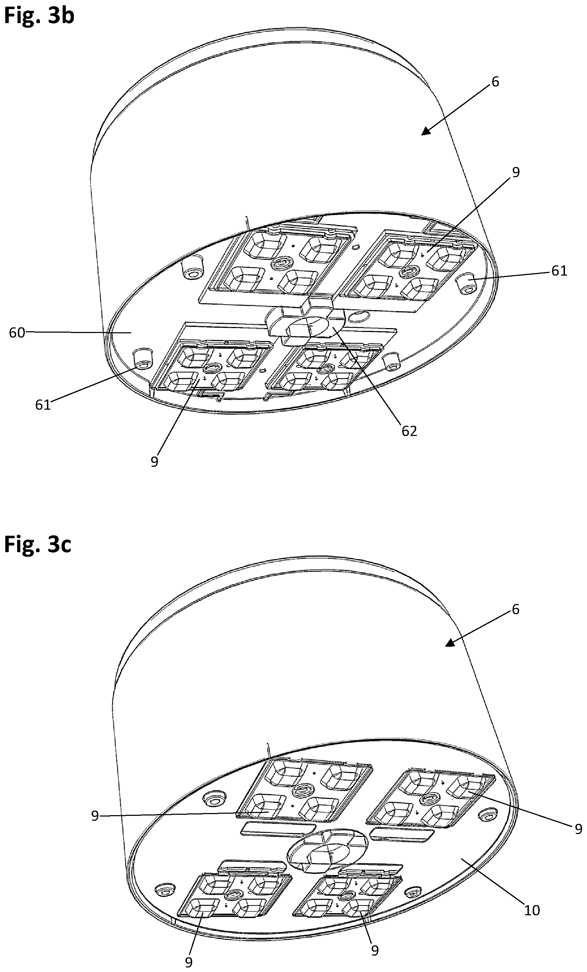

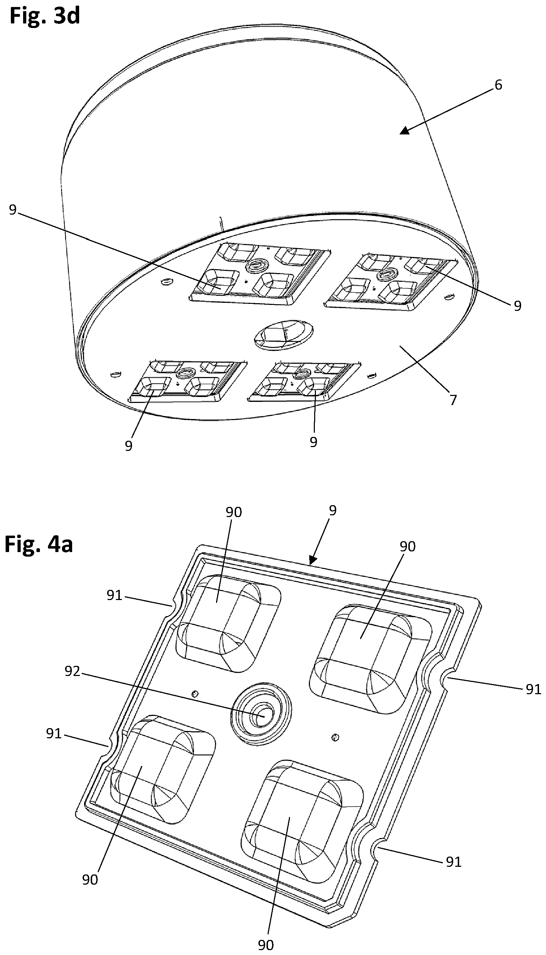

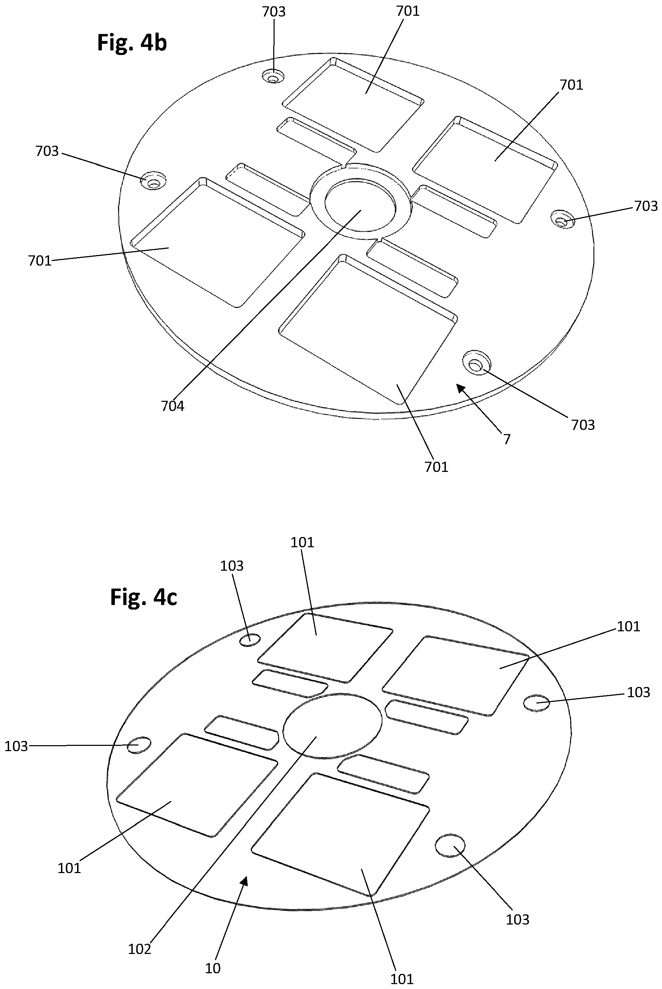

Einzelne Komponenten der in den Figuren 1 und 2 gezeigten Ausführungsform einer Leuchte 1 sind in den Figuren 3 und 4 detaillierter dargestellt. In Figur 3 umfassend die Figuren 3a, 3b, 3c und 3d ist der Geräteträger 6 perspektivisch von unten dargestellt. Dabei ist die Außenseite des Topfbodens 60 sichtbar, die die Montageseite des Geräteträgers 6 ausbildet. Zur Veranschaulichung der relativen Anordnung von verschiedenen Komponenten zueinander sind in den Figuren 3a bis 3d sukzessive mehr der an dem Montageseite des Geräteträgers 6 angeordneten Bestandteile der Leuchte 1 dargestellt. In Figur 3a ist lediglich die Anordnung der Platinen 8 mit ihren LEDs an der Montageseite des Geräteträgers 6 dargestellt. In Figur 3b ist die Anordnung der Optikelemente 9 auf den Platinen 8 an der Montageseite des Geräteträgers 6 dargestellt, die sich ausgehend von der in Figur 3a dargestellten Anordnung realisieren lässt. In Figur 3c ist die Anordnung einer Reflektorplatte 10 an der Montageseite des Geräteträgers 6 dargestellt, die sich ausgehend von der in Figur 3b gezeigten Anordnung realisieren lässt. In Figur 3d ist die Anordnung des Lichtleiters 7 an der Montageseite des Geräteträgers 6 dargestellt, die sich ausgehend von der Anordnung gemäß Figur 3c realisieren lässt. Aus der Zusammenschau der Figuren 3a, 3b, 3c und 3d ist ersichtlich, dass der Lichtleiter 7 nach Art einer Platte ausgebildet ist, in der Aussparungen vorgesehen sind, die im Betriebszustand der Leuchte 1 fluchtend zu Aussparungen angeordnet sind, die in der Reflektorplatte 10 vorgesehen sind, so dass im Betriebszustand die Optikelemente 9 in den Aussparungen des Lichtleiters 7 angeordnet sind. An der Montageseite sind Schraubdome 61 vorgesehen, in die ausgehend von der in Figur 3 gezeigten Anordnung Schrauben eingeschraubt werden können, die den Lichtleiter 7 und die Reflektorplatte 10 gemeinsam fixieren, indem der Lichtleiter 7 gegen die Reflektorplatte 10 und diese gegen die Montageseite des Geräteträgers 6 presst, was erfindungsgemäß allgemein vorteilhaft ist. Aus Figur 3d ist ersichtlich, dass der Lichtleiter 7 gemeinsam mit den Optikelementen 9 mehr als 80 %, insbesondere mehr als 90 % der Montageseite des Geräteträgers 6 bedeckt. Ferner ist ersichtlich, dass, erfindungsgemäß allgemein vorteilhaft, die Optikelemente 9 jeweils mehrere optische Abschnitte aufweisen, wobei jeder der optischen Abschnitte genau einer der LED-Lichtquellen der Platinen 8 zugeordnet ist. Ferner ist aus Figur 3 ersichtlich, dass durch die Fixierung des Lichtleiters 7 an dem Geräteträger 6 der Lichtleiter 7 einen Anpressdruck auch auf die Optikelemente 9 gegen die Montageseite des Geräteträgers 6 ausübt, was erfindungsgemäß allgemein vorteilhaft ist, da hierdurch eine besonders zuverlässige Positionierung von Lichtleiter 7, Reflektorplatte 10 und Optikelementen 9 relativ zum Geräteträger 6 sichergestellt sein kann. Aus Figur 3d ist ersichtlich, dass die Optikelemente 9 vertikal nicht von dem Lichtleiter 7 verdeckt sind, sondern lediglich horizontal umlaufend von dem Lichtleiter 7 umschlossen sind, was erfindungsgemäß allgemein vorteilhaft ist. Durch diese Anordnung der beschriebenen Ausführungsform ist gewährleistet, dass die Optikelemente 9 das Licht, das von den ihnen jeweils zugeordneten LED-Lichtquellen emittiert ist, weit überwiegend ohne Interaktion mit dem Lichtleiter 7 und somit außerhalb des Lichtleiters 7 durch den Innenraum der Leuchte 1 zur Abdeckung 4 hin strahlen, so dass es ohne Interaktion mit dem Lichtleiter 7 an die Innenseite der Abdeckung 4 gelangt, durch diese hindurchtreten kann und von deren Außenseite an die Umgebung der Leuchte 1 abgegeben werden kann. Da die Optikelemente 9 dergestalt ausgebildet sind, dass sie eine solche Lichtverteilung des Lichts gewährleisten, das von den ihnen zugeordneten LED-Lichtquellen emittiert wird, die einen breiten Abstrahlwinkel hat, gelangt jedoch auch ein gewisser Anteil des von diesen LED-Lichtquellen emittierten Lichts über einen Lichteinkoppelabschnitt des Lichtleiters 7 in den Lichtleiter 7 und propagiert zwischen dessen flächigen Außenseiten. Der Lichteinkoppelabschnitt des Lichtleiters 7 ist vorliegend durch die Schmalseitenabschnitte des Lichtleiters 7 ausgebildet, die die Aussparungen begrenzen, in denen die Optikelemente 9 angeordnet sind. Nachdem das Licht von den Schmalseiten in den Lichtleiter 7 eingekoppelt wurde, propagiert es über die gesamte flächige Erstreckung des Lichtleiters 7 hinweg und wird an der nach unten weisenden flächigen Außenseite des Lichtleiters 7 über dessen gesamte flächige Erstreckung hinweg abgestrahlt, die in Figur 3d von unten sichtbar ist. An der Montageseite weist der Geräteträger 6 ferner eine Positioniereinrichtung 62 auf, die zum Positionieren des Trägers 5 relativ zum Geräteträger 6 ausgebildet ist, wobei, erfindungsgemäß allgemein vorteilhaft, die Metallplatte 10 und der Lichtleiter 7 jeweils eine Durchführung aufweisen, durch die hindurch die Positioniereinrichtung 62 von unten zugänglich ist, damit der Träger 5 auf einfache Weise mit dieser in Verbindung gebracht werden kann.

In Figur 4 umfassend die Figuren 4a, 4b und 4c sind eines der Optikelemente 9, der Lichtleiter 7 und die Reflektorplatte 10 der vorangehend beschriebenen Ausführungsform detaillierter dargestellt. Aus Figur 4a ist ersichtlich, dass das Optikelement 9 vier optische Abschnitte 90 aufweist, die jeweils genau einer der LED-Lichtquellen zugeordnet sind. Ferner ist ersichtlich, dass das Optikelement 9 eine zentrale Durchführung 92 aufweist, mittels derer es auf einfache Weise zuverlässig am Geräteträger 6 befestigt werden kann. Ferner ist ersichtlich, dass das Optikelement 9 an seiner Außenseite Positioniereinrichtungen 91 in Form von Ausnehmungen aufweist. Aus Figur 4b ist ersichtlich, dass der Lichtleiter 7 eine Form nach Art einer Platte aufweist. In dem Lichtleiter 7 sind Aussparungen 701 vorgesehen, in denen die Optikelemente 9 im Betriebszustand der Leuchte 1 angeordnet sind. Wie aus Figur 4c ersichtlich, in der die Reflektorplatte 10 dargestellt ist, weist die Reflektorplatte 10 analoge Aussparungen 101 auf, wobei die Aussparungen 101 der Reflektorplatte 10 und die Aussparungen 701 des Lichtleiters 7 im Betriebszustand fluchtend zueinander ausgerichtet sind, so dass die Optikelemente 9 jeweils sowohl eine Aussparung 101 als auch eine Aussparung 701 angeordnet sind, was erfindungsgemäß allgemein vorteilhaft ist. Ferner ist ersichtlich, dass der Lichtleiter 7 und die Reflektorplatte 10 jeweils Durchführungen 703, 103 aufweisen, durch die hindurch sich ein Befestigungsmittel erstrecken kann, das in die zuvor erläuterten Schraubdome 61 geschraubt werden kann. Ferner ist ersichtlich, dass eine mittige Durchführung 102, 702 für die Positioniereinrichtung 62 vorgesehen ist.

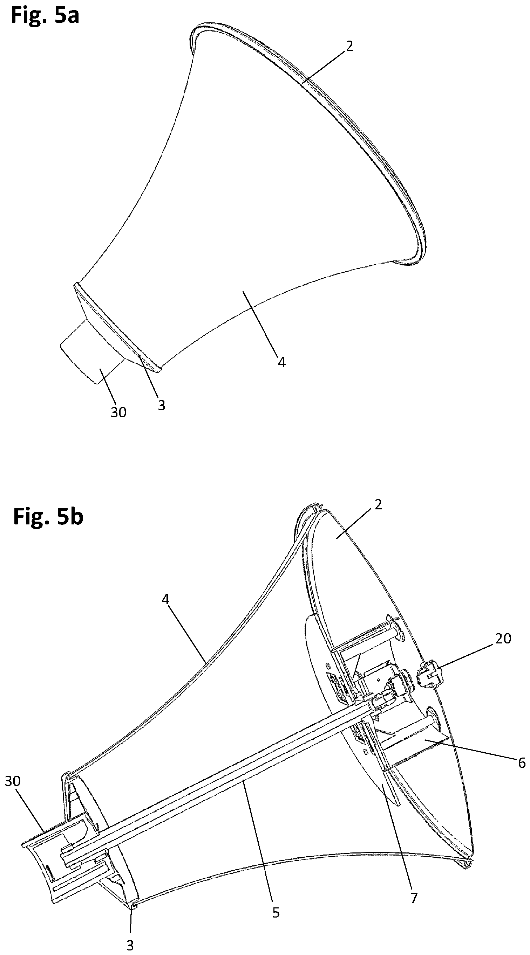

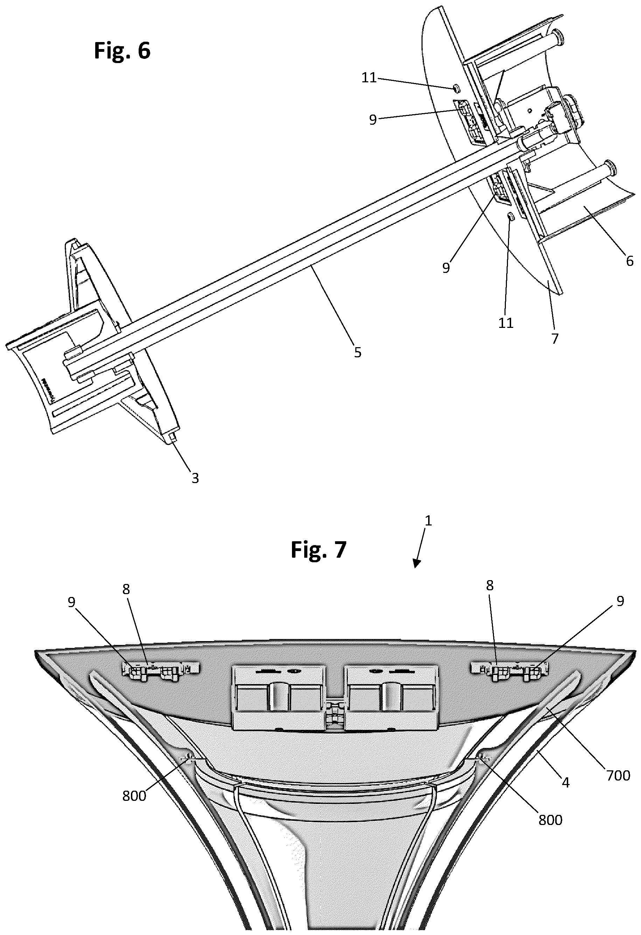

In Figur 5 umfassend die Figuren 5a und 5b ist eine weitere Ausführungsform einer erfindungsgemäßen Leuchte 1 in schematischen Prinzipdarstellungen dargestellt. Die Leuchte 1 gemäß Figur 5 weist, analog zu der Ausführungsform gemäß Figur 1 einen Deckel 2 und einen Befestigungskörper 3 auf, die durch einen Träger 5 aneinander fixiert gehalten sind und die durch eine Abdeckung 4 miteinander verbunden sind. In Abweichung zu der Ausführungsform gemäß Figur 1 ist die röhrenformartige Abdeckung 4 nach Art einer Trompete ausgebildet. Die Ausführungsform gemäß Figur 5 unterscheidet sich von der Ausführungsform gemäß Figur 1 darüber hinaus dadurch, dass sich der Lichtleiter 7 horizontal über die Montageseite des Geräteträgers 6 hinaus erstreckt, wohingegen der Lichtleiter 7 bei der Ausführungsform gemäß Figur 1 ausschließlich innerhalb der horizontalen Erstreckung des Geräteträgers 6 vorgesehen ist. Wie aus Figur 6 ersichtlich, in der eine vergrößerte Schnittdarstellung der Leuchte 1 gemäß Figur 5 ohne die Abdeckung 4 und ohne den Deckel 2 dargestellt ist, sind als Befestigungsmittel 11 Schrauben vorgesehen, die den Lichtleiter 7 gegen die Reflektorplatte 10 und die Optikelemente 9 pressen und diese gegen die Montageseite des Geräteträgers 6 pressen.

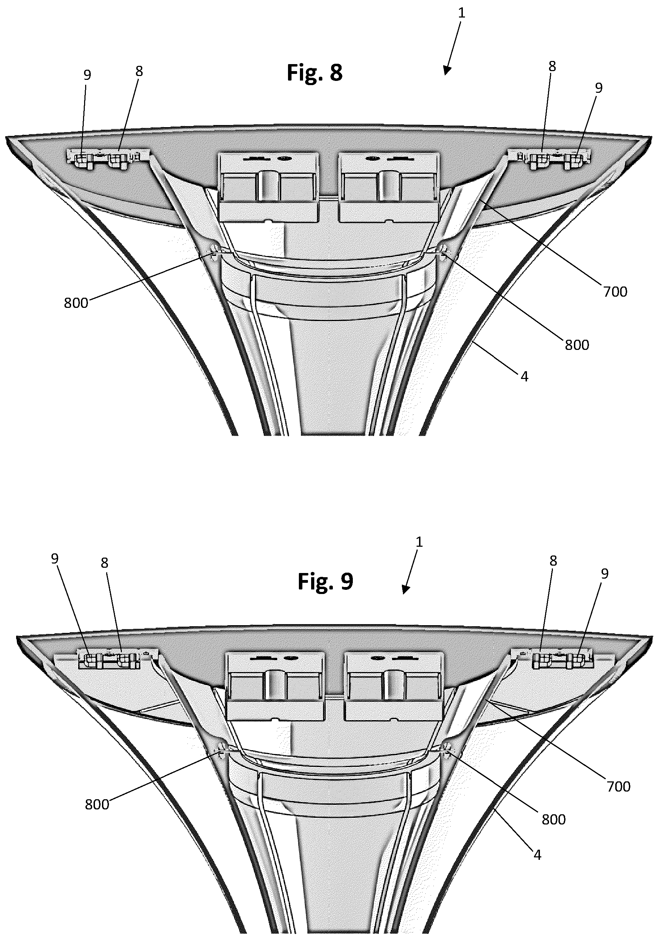

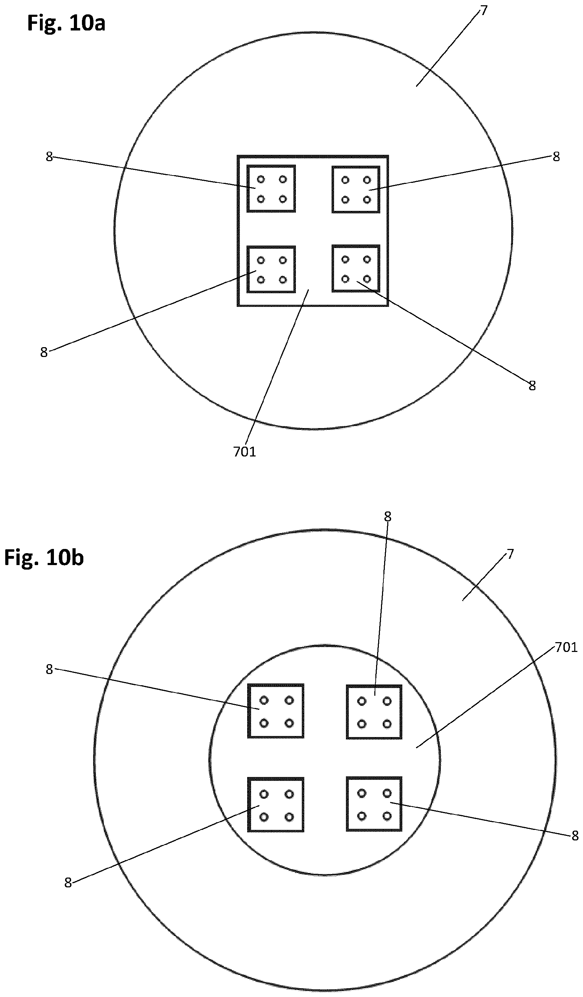

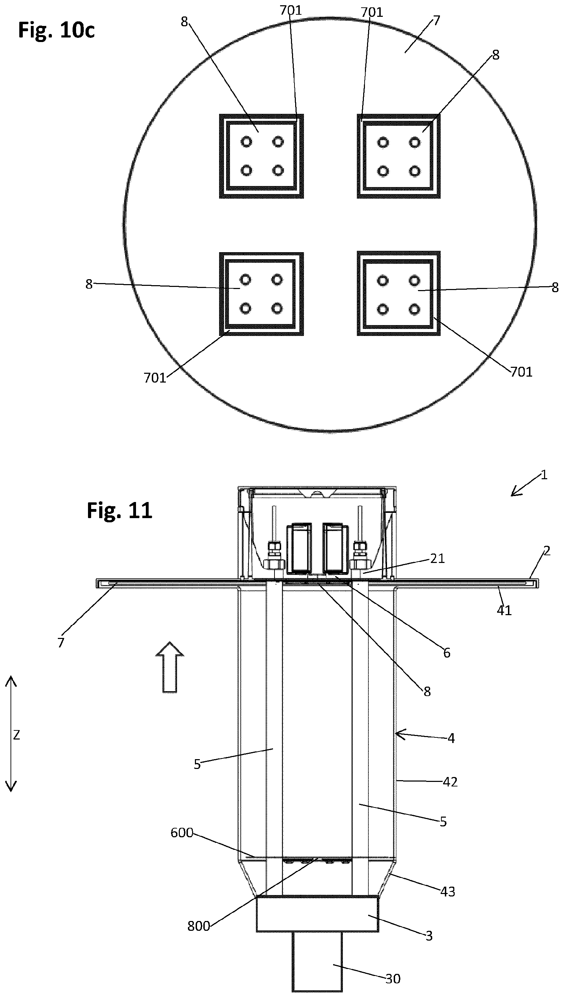

In den Figuren 7 bis 9 sind weitere Ausführungsformen einer erfindungsgemäßen Leuchte 1 in schematischen Prinzipdarstellungen dargestellt. Bei den in den Figuren 7 bis 9 dargestellten Ausführungsbeispielen ist die Abdeckung 4 jeweils röhrenartig, vorliegend nach Art einer Trompete, ausgebildet. Die verschiedenen Ausführungsformen der Figuren 7, 8 und 9 unterscheiden sich durch die Ausgestaltung und Anordnung des Lichtleiters 700 bzw. der Platinen 8 (mit Lichtquellen) und der Optikelemente 9. Bei dem Ausführungsbeispiel gemäß Figur 1 sind die Lichtquellen, die ersten Gruppe an Lichtquellen angehören und denen somit jeweils ein Optikelement 9 zugeordnet ist, horizontal innerhalb der Erstreckung des Lichtleiters 700 angeordnet, so dass sie Licht an die Abdeckung 4 nur abgeben können, indem sie den Lichtleiter 7 durchstrahlen. Dabei wird das von den Lichtquellen der Platine 8 ausgesandte Licht jedoch nicht in den Lichtleiter 7 dergestalt eingekoppelt, dass es zwischen seinen Außenseiten entlang den Außenseiten propagiert, sondern es wird lediglich durch Brechung am Lichtleiter 700 umgelenkt und durchquert somit lediglich den Lichtleiter 700 in seiner Dicke. Hingegen ist bei der Ausführungsform gemäß Figur 7 eine weitere Gruppe an Lichtquellen an einer weiteren Platine 800 vorgesehen, wobei die Lichtquellen dieser Platine 800 in einer Aufnahme des Lichtleiters 700 angeordnet sind, die den Lichteinkoppelabschnitt des Lichtleiters 700 ausbildet. Die Platine 800 ist als ringförmige Platine ausgebildet, wobei sich die Ringform durch separate Kreisringabschnitte zusammensetzt. Bei dem Ausführungsbeispiel gemäß Figur 7 wird im Betriebszustand der Leuchte 1 in den Lichtleiter 700 nur solches Licht dergestalt in den Lichtleiter 700 eingekoppelt, dass es zwischen seinen flächigen Außenseiten propagiert, das von den weiteren Lichtquellen der weiteren Platine 800 stammt. Solche weiteren Lichtquellen und eine solche weitere Platine 800 sind auch bei den Ausführungsbeispielen gemäß den Figuren 8 und 9 vorgesehen, wobei jedenfalls bei dem Ausführungsbeispiel gemäß Figur 9 eine solche weitere Platine 800 mit weiteren Lichtquellen auch in einer abgewandelten Ausführungsform, die immer noch erfindungsgemäß ist, weggelassen sein kann. Bei der Ausführungsform gemäß Figur 8 sind die Lichtquellen der Gruppe an Lichtquellen und somit die Platinen 8 horizontal zwischen dem Lichtleiter 700 und der Abdeckung 4 angeordnet, so dass von ihnen ausgesandtes Licht zur Abdeckung 4 gelangt, ohne mit dem Lichtleiter 700 zu interagieren. Dies ist vorliegend dadurch bedingt, dass die Optikelemente 9 dazu ausgebildet sind, das von den LEDs der Platinen 8 emittierte Licht ausschließlich nach außen zur Abdeckung 4 hinzulenken. In alternativen Ausführungsformen ist denkbar, dass die Optikelemente 9 dergestalt ausgebildet sind, dass sie die Lichtverteilung des Lichts, das von den ihnen zugeordneten LED-Lichtquellen emittiert wird, so festlegen, dass ein Teil des Lichts der Lichtverteilung an einer Außenseite des Lichtleiters 7 reflektiert wird und von dort zur Abdeckung 4 gelangt, jedoch nicht in den Lichtleiter 700 so eingekoppelt wird, dass es zwischen seinen Außenseiten entlang der Außenseiten propagiert. Bei dem Ausführungsbeispiel gemäß Figur 9 ist der Lichtleiter 700 zweiteilig ausgebildet. Der Lichtleiter 700 bei dem Ausführungsbeispiel gemäß Figur 9 umfasst zum einen die röhrenartige Form, die bereits in Figur 8 dargestellt ist, zum anderen darüber hinaus eine Kreisringform, die an dem Deckel 2 der Leuchte 1 angeordnet ist und die Aussparungen aufweist, in denen die Optikelemente 9 angeordnet sind. Die Ausführungsform gemäß Figur 9 bringt den besonderen Vorteil mit sich, dass von den Optikelementen 9 ausgesandtes Licht zwar im Wesentlichen ohne Interaktion mit dem Lichtleiter 700 zur Abdeckung 4 gelangt, jedoch zu einem geringen Teil in den kreisringförmigen Körper des Lichtleiters 700 eingekoppelt wird, so dass von außen betrachtet der gesamte Deckel 2 an seiner Innenseite leuchtend erscheint und eine weiter optimierte Lichtabstrahlcharakteristik der Leuchte 1 bereitgestellt sein kann.Figur 10 umfassend die Figuren 10a, 10b und 10c zeigt jeweils analoge Ansichten auf sich jeweils entsprechende Komponenten von unterschiedlichen Ausführungsformen einer erfindungsgemäßen Leuchte 1. In jeder der Figuren 10a, 10b und 10c sind jeweils ein Lichtleiter 7 und mehrere Platinen 8 mit einer Ansicht entlang der Vertikalrichtung Z von unten, wie dies beispielsweise durch einen Pfeil in Figur 11 gekennzeichnet ist, dargestellt. Die verschiedenen Ausführungsformen unterscheiden sich in der Ausgestaltung des Lichtleiters 7. Während bei der Ausführungsform gemäß Figur 10a der Lichtleiter 7 eine durchgehende quadratische Aussparung 701 aufweist, innerhalb derer die Platinen 8 angeordnet sind, weist der Lichtleiter 7 der Ausführungsform gemäß Figur 10b eine durchgehende kreisrunde Aussparung 701 auf, in der die Platinen 8 angeordnet sind, wohingegen der Lichtleiter 7 der Ausführungsform gemäß Figur 10c vier voneinander beabstandete Aussparungen 701 aufweist, wobei in jeder Aussparung 701 jeweils eine Platine 8 angeordnet ist. An den Platinen 8 sind in der gezeigten Ausführungsform jeweils mehrere LED-Lichtquellen angeordnet, und selbstverständlich können bevorzugt in der Ausführungsform der Leuchte Optikelemente vorgesehen sein, die jeweils einer Platine 8 und somit sämtlichen an der Platine 8 angeordneten LED-Lichtquellen oder jeweils isoliert nur jeweils einer LED-Lichtquelle zugeordnet sind, beispielsweise können Optikelemente wie zu Figur 4 erläutert vorgesehen sein. Das Vorsehen einer kreisrunden beziehungsweise rotationssymmetrischen Aussparung 701, wie dies in Figur 10b gezeigt ist, kann bei erfindungsgemäßen Ausführungsformen allgemein vorteilhaft vorgesehen sein, beispielsweise um mit dem Lichtleiter 7 eine möglichst rotationssymmetrische Abstrahlung von Licht, insbesondere auch bei hohen Leuchtdichten, zu gewährleisten.

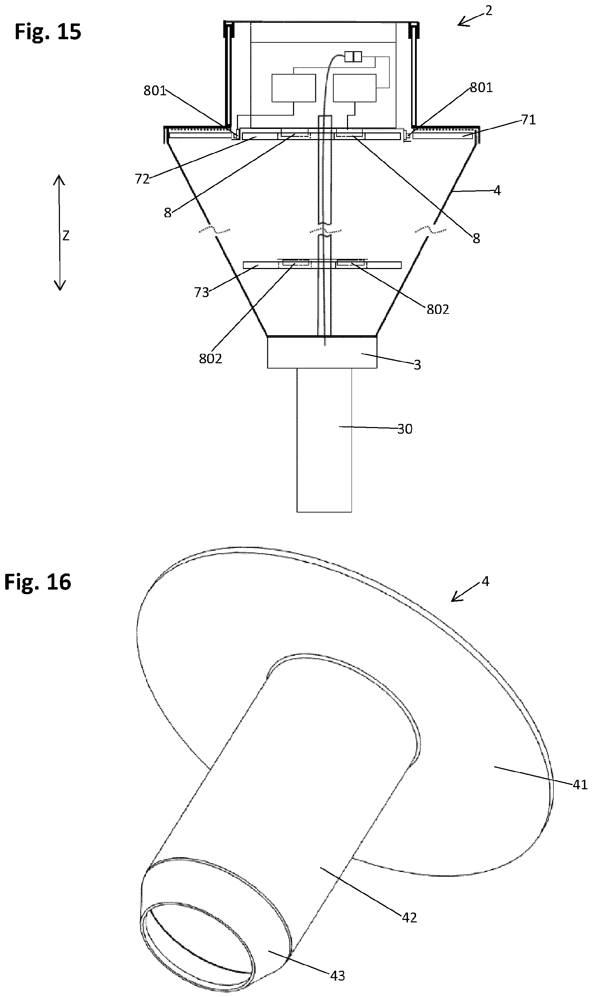

In Figur 11 ist in einer schematischen Prinzipdarstellung eine Seitenansicht auf einen Schnitt durch eine Ausführungsform einer erfindungsgemäßen Leuchte 1 vereinfacht dargestellt. Die Leuchte 1 erstreckt sich, erfindungsgemäß allgemein vorteilhaft, entlang der Vertikalrichtung Z von oben nach unten. Bei der in Figur 11 gezeigten Ausführungsform ist an einem unteren Ende der Abdeckung 4 ein Befestigungskörper 3 vorgesehen, an dessen unterem Ende ein hohlzylindrischer Mastaufsatzabschnitt 30 vorgesehen ist. Die Abdeckung 4 erstreckt sich von dem Befestigungskörper 3 entlang der Vertikalrichtung Z nach oben bis zum Deckel 2. Die Leuchte 1 gemäß Figur 11 weist einen Träger 5 auf, der bei der Ausführungsform gemäß Figur 11 durch zwei entlang der Vertikalrichtung Z verlaufende, säulenartige Trägerelemente ausgebildet ist. Mittels des Trägers 5 sind sowohl der Geräteträger 6 als auch der Deckel 2 vertikal beabstandet zu dem Befestigungskörper 3 gehalten, was erfindungsgemäß allgemein vorteilhaft ist. Die Abdeckung 4, ebenfalls erfindungsgemäß allgemein vorteilhaft, ist zum einen mit ihrem unteren Ende an den Befestigungskörper 3 abgestützt und zum anderen mittels des Geräteträgers 6 und/oder des Deckels 2 über den Träger 5 relativ zum Befestigungskörper 3 fixiert. In dem vorliegend erläuterten Ausführungsbeispiel weist der Deckel 2 nach innen abragende Befestigungsvorsprünge 21 auf, die in jeweils einem der Trägerelemente des Trägers 5 fixiert sind. Der Geräteträger 6 ist nach Art einer Topfform ausgebildet, wobei der Topfboden eine große Aussparung aufweist, durch die hindurch die Trägerelemente des Trägers 5 verlaufen und lediglich durch an der Topfwand vorgesehene, den Topfboden ausbildende Vorsprünge ausgebildet ist. Diese Vorsprünge beziehungsweise der Topfboden bildet die Montageseite des Geräteträgers 6 aus, an der ein plattenartiges Montageelement fixiert ist, an dem die zumindest eine Platine 8 fixiert ist. Bei der Ausführungsform gemäß Figur 11 weist die Abdeckung, erfindungsgemäß allgemein vorteilhaft, einen ersten vertikalen Abschnitt 41, einen zweiten vertikalen Abschnitt 42 und einen dritten vertikalen Abschnitt 43 auf. Die drei vertikalen Abschnitte 41, 42, 43 sind vertikal aufeinanderfolgend und unmittelbar aneinander angrenzend vorgesehen. Ein vereinfachte schematische Prinzipdarstellung einer perspektivischen Ansicht auf eine entsprechend ausgebildete Abdeckung 4 ist in Figur 16 gezeigt. Der zweite vertikale Abschnitt 42 der Abdeckung 4 ist nach Art eines Hohlzylinders ausgebildet, der dritte vertikale Abschnitt der Abdeckung 4 ist nach Art eines Kegelstumpfs ausgebildet, sodass zweiter und dritter vertikaler Abschnitt 42, 43 gemeinsam einen röhrenartigen Vertikalabschnitt der Abdeckung 4 ausbilden. Der erste vertikale Abschnitt 41 ist nach Art einer kreisringförmigen Ringscheibe ausgebildet. Erster, zweiter und dritter vertikaler Abschnitt 41, 42, 43 sind entlang der Vertikalrichtung Z unterhalb des Lichtleiters 7 angeordnet. Der Lichtleiter 7 ist innerhalb des Innenraums der Leuchte 1 angeordnet. Dabei weist der Lichtleiter 7 einen Überkragungsabschnitt auf, mit dem er sich um eine vertikale Mittenachse der Leuchte 1 umlaufend horizontal über den Vertikalabschnitt der Abdeckung 4 hinaus erstreckt und somit über diesen dachartig vorsteht, wobei der Vertikalabschnitt durch den zweiten und dritten vertikalen Abschnitt 42, 43 der Abdeckung 4 gebildet ist. Die Ausführungsform gemäß Figur 11 weist somit den besonderen Vorteil auf, dass in dem Betriebszustand der Leuchte 1 der überwiegende Anteil des von der Leuchte 1 in die Umgebung abgestrahlten Lichts von dem zweiten und dritten vertikalen Abschnitt 42, 43 und somit von dem genannten Vertikalabschnitt der Abdeckung 4 in die Umgebung abgestrahlt wird, wohingegen der Lichtleiter 7 mit seinem Überkragungsabschnitt horizontal über diesen Vertikalabschnitt der Abdeckung 4 vorsteht und an seiner Unterseite durch den ersten vertikalen Abschnitt 41 der Abdeckung verdeckt ist, sodass die Leuchte 1 einen Teil des von ihr insgesamt abgestrahlten Lichts horizontal außerhalb des genannten Vertikalabschnitts der Abdeckung 4 ausgehend von dem ersten vertikalen Abschnitt 41 der Abdeckung 4 in die Umgebung abstrahlen kann, wobei das Licht, das von dem ersten vertikalen Abschnitt 41 der Abdeckung 4 in die Umgebung abgestrahlt wird, aus dem Lichtleiter 7 ausgekoppeltes Licht ist.

Bei der Ausführungsform gemäß Figur 11 ist durch die Ausgestaltung des dritten vertikalen Abschnitts 43 der Abdeckung 4 ferner gewährleistet, dass die Außenseite der Abdeckung 4 innerhalb ihres an den Befestigungskörper 3 vertikal angrenzenden Endbereichs, der durch den dritten vertikalen Abschnitt der Abdeckung gebildet ist, zur Vertikalrichtung Z abgewinkelt verläuft. Somit kann innerhalb dieses vertikalen Endbereichs beziehungsweise innerhalb des dritten vertikalen Abschnitts 43 der Abdeckung 4 besonders vorteilhaft Licht zur Seite und nach unten abgestrahlt werden. Hierzu ist bei der beschriebenen Ausführungsform und erfindungsgemäß allgemein vorteilhaft ein weiterer Geräteträger 600 vorgesehen, der oberhalb des unteren Endbereichs der Abdeckung 4, vorliegend somit oberhalb des dritten vertikalen Abschnitts 43 der Abdeckung 4, angeordnet ist. An dem weiteren Geräteträger 600 ist eine weitere Platine 800 angeordnet, an der Lichtquellen, die bevorzugt einer weiteren Lichtquellengruppe angehören, angeordnet sind, die zum Ausleuchten des dritten vertikalen Abschnitts 43 der Abdeckung 4 ausgebildet sind. Somit weist die Ausführungsform gemäß Figur 11 einen ersten, einen zweiten und einen dritten Lichtabstrahlbereich auf, die vertikal untereinander angeordnet sind, wobei der erste Lichtabstrahlbereich durch den vertikalen Abschnitt 41, der zweite Lichtabstrahlbereich durch den zweiten vertikalen Abschnitt 42 und der dritte Lichtabstrahlbereich durch den dritten vertikalen Abschnitt 43 der Abdeckung 4 ausgebildet ist und wobei im Betriebszustand der Leuchte 1 in jedem Lichtabstrahlbereich Licht mit einer gemittelten Abstrahlrichtung abgestrahlt wird, wobei die dem ersten Lichtabstrahlbereich zugeordnete erste gemittelte Abstrahlrichtung einen kleineren Winkel zur Vertikalrichtung Z bildet als die dem dritten Lichtabstrahlbereich zugeordnete dritte gemittelte Abstrahlrichtung und wobei die dritte Abstrahlrichtung einen kleineren Winkel zur Vertikalrichtung Z bildet als die dem zweiten Lichtabstrahlbereich zugeordnete zweite Abstrahlrichtung. Die gemittelte Abstrahlrichtung ist dabei dadurch zu ermitteln, dass durch die von dem jeweiligen Lichtabstrahlbereich erzeugte dreidimensionale Lichtverteilungskurve eine in Vertikalrichtung Z verlaufende Schnittebene gelegt wird und ausgehend von dem Nullpunkt der Lichtverteilungskurve die gemittelte Abstrahlrichtung an einer Seite der vertikalen Mittenachse der Leuchte 1 so zur Lichtverteilungskurve ausgerichtet wird, dass an dieser Seite der vertikalen Mittenachse der Flächeninhalt des Schnitts (in der Schnittebene) der Lichtverteilungskurve an beiden Seiten der gemittelte Abstrahlrichtung gleich groß ist. Bei dem Vergleich der Winkel, den die jeweilige gemittelte Abstrahlrichtung mit der Vertikalachse bildet, wird zum Ermitteln der jeweiligen Abstrahlrichtung auf eine selbe Schnittebene, die durch die Lichtverteilungskurve des ersten, zweiten und dritten Lichtabstrahlbereichs jeweils verläuft, und auf eine selbe Seite der vertikalen Mittenachse abgestellt.

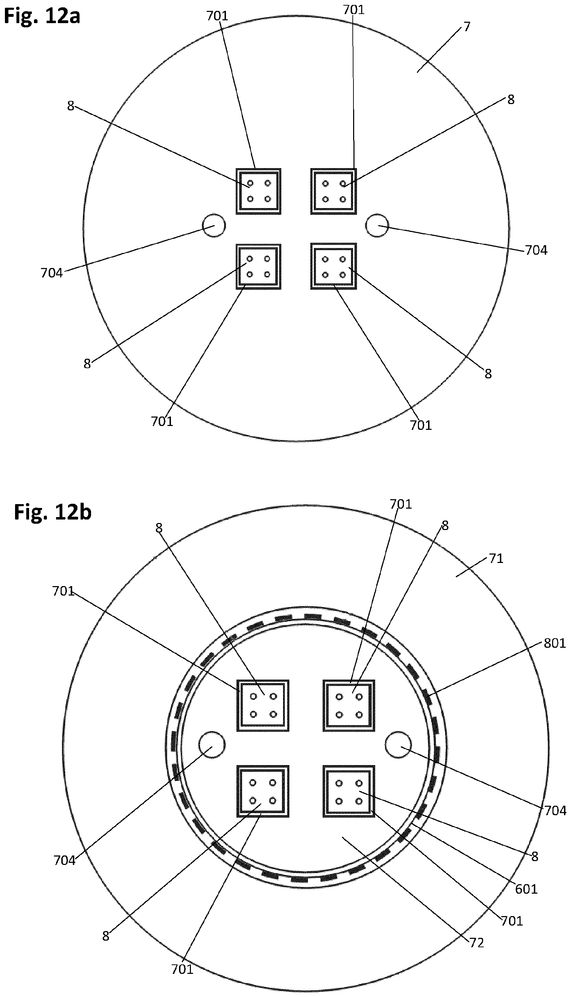

In Figur 12 umfassend die Figuren 12a und 12b sind in verschiedenen schematischen Prinzipdarstellungen jeweils analoge Ansichten entlang der Vertikalrichtung Z von unten, wie dies in Figur 11 mittels eines Pfeils dargestellt ist, auf Komponenten unterschiedlicher Ausführungsformen der erfindungsgemäßen Leuchte 1 dargestellt. Bei der Ausführungsform gemäß Figur 12a ist ein einstückig ausgebildeter Lichtleiter 7 vorgesehen, in dem Aussparungen 701 zum Aufnehmen von jeweils einer Platine 8 vorgesehen sind und in dem Fixieraussparungen 704 zum Durchführen von jeweils einem Trägerelement eines Trägers 5 vorgesehen sind. Der Lichtleiter 7 gemäß Figur 12a kann beispielsweise den Lichtleiter 7 der Ausführungsform gemäß Figur 11 ausbilden. Bei der Ausführungsform gemäß Figur 12b weist der Lichtleiter 7 ein erstes Lichtleiterelement 71 und ein zweites Lichtleiterelement 72 auf. Der Lichtleiter 7, der durch die Lichtleiterelemente 71, 72 ausgebildet ist und in Figur 12b gezeigt ist, kann entsprechend bei einer Ausführungsform zum Einsatz kommen, die zumindest ähnlich wie die in Figur 11 dargestellt ausgebildet ist. Das zweite Lichtleiterelement 72 weist Fixieraussparungen 704 und Aussparungen 701 auf, wie dies zum Lichtleiter 7 der Ausführungsform gemäß Figur 12a erläutert ist. Allerdings weist das zweite Lichtleiterelement 72 eine kleinere horizontale Erstreckung als der Lichtleiter 7 gemäß Figur 12a auf. Das erste Lichtleiterelement 71 ist nach Art eines Kreisrings ausgebildet, der eine Aussparung aufweist, in der das zweite Lichtleiterelement 72 und ein Geräteträgerabschnitt 601 sowie eine weitere Platine 801 angeordnet sind. Der Geräteträgerabschnitt 601 ist ringförmig, d.h. als Trägerring, ausgebildet, und an dem Geräteträgerabschnitt 601 sind an der Platine 801 vorgesehene, gleichmäßig um die vertikale Mittenachse der Leuchte angeordnete LED-Lichtquellen vorgesehen. Diese LED-Lichtquellen, die an der weiteren Platine 801 vorgesehen sind, bilden eine erste Teilmenge an Lichtquellen, die dem ersten Lichtleiterelement 71 zugeordnet ist und nur in dieses, nicht aber in das zweite Lichtleiterelement 72 Licht einkoppelt, wohingegen die LED-Lichtquellen, die an den Platinen 8 angeordnet sind, dem zweiten Lichtleiterelement zugordnet sind und nur in diese, nicht aber in das erste Lichtleiterelement 71 Licht einkoppeln. Die erste Teilmenge an Lichtquellen sowie die Platine 801 sowie der Geräteträgerabschnitt 601 sind in einem Zwischenraum angeordnet, der sich durch den zwischen erstem und zweitem Lichtleiterelement 71, 72 vorgesehenen Abstand ergibt. Durch die Lichtquellen der ersten Teilmenge kann eine Kanteneinstrahlung in das erste Lichtleiterelement 71 besonders vorteilhaft gewährleistet sein, wodurch eine besonders vorteilhafte und lichtstarke Abstrahlung von Licht mittels des ersten Lichtleiterelements 71 bereitgestellt werden kann. Während bei der Ausführungsform gemäß Figur 12a ein Abschnitt des einstückig ausgebildeten Lichtleiters 7 den Überkragungsabschnitt des Lichtleiters 7 ausbildet, bildet bei der Ausführungsform gemäß Figur 12b das erste Lichtleiterelement 71 den Überkragungsabschnitt des Lichtleiters 7 aus, wohingegen das zweite Lichtleiterelement 72 mit seiner horizontalen Erstreckung innerhalb der horizontalen Erstreckung des erläuterten Vertikalabschnitts der Abdeckung 4 angeordnet ist.

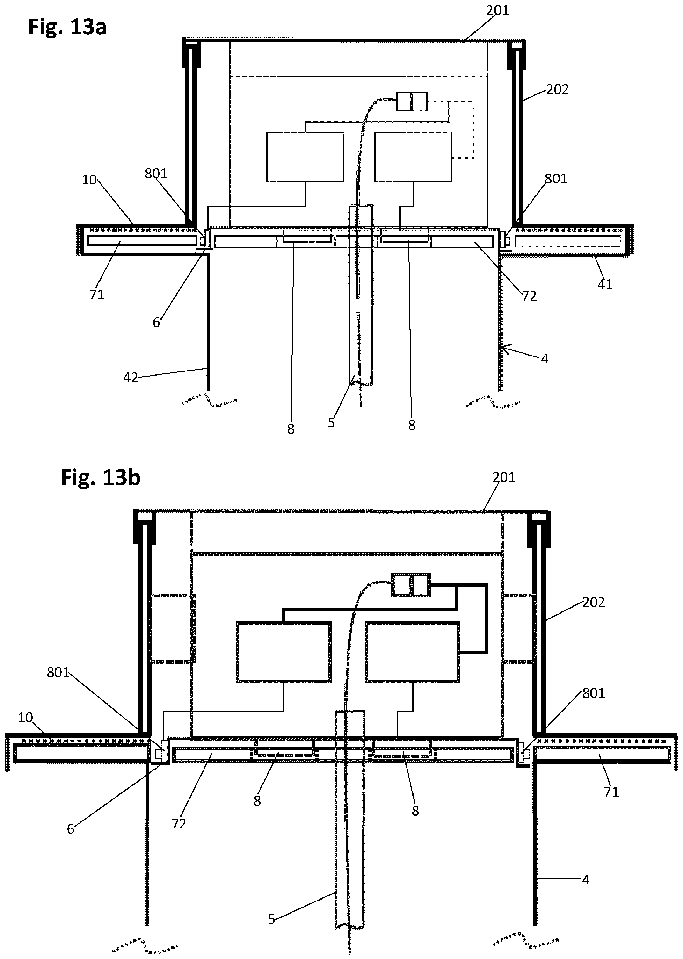

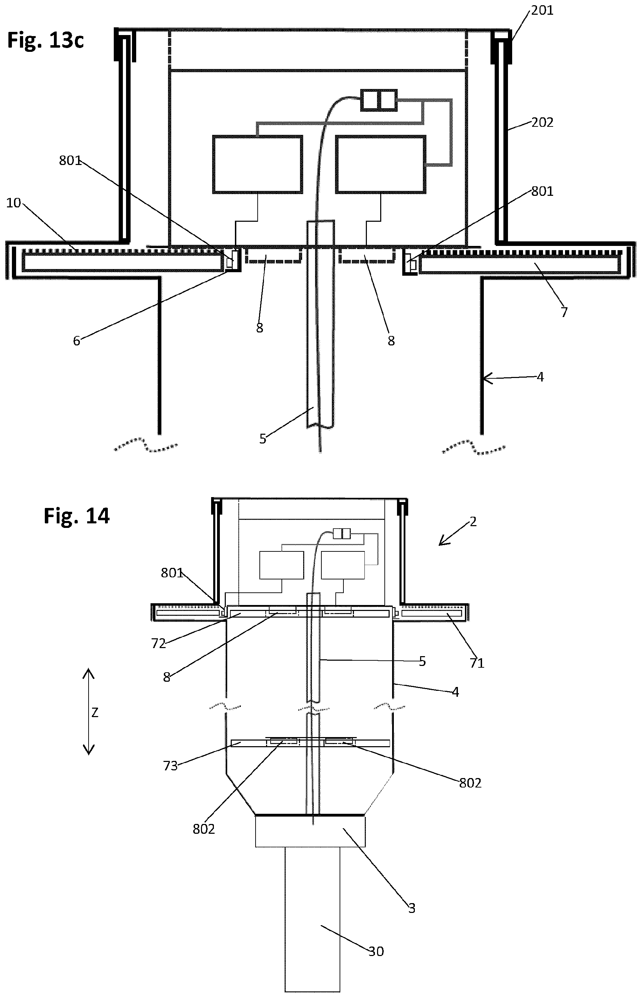

In Figur 13 umfassend die Figuren 13a, 13b und 13c sind in verschiedenen schematischen Prinzipdarstellungen analoge Seitenansichten auf einen Schnitt durch eine jeweils andere Ausführungsform einer erfindungsgemäßen Leuchte 1 dargestellt. Die Ausführungsformen sind jeweils nicht vollständig, sondern jeweils nur anhand einiger Komponenten der jeweiligen Ausführungsform dargestellt. Den in den Figuren 13a, 13b und 13c dargestellten Ausführungsformen ist gemeinsam, dass ein Träger 5 nach Art einer Säule vorgesehen ist, mittels derer der Geräteträger 6 an dem jeweils nicht dargestellten Befestigungskörper der jeweiligen Leuchte befestigt ist. Durch den Träger 5 hindurch verläuft ein Versorgungskabel, dass schematisch dargestellte elektrische Komponenten versorgt. Die elektrischen Komponenten sind einerseits zum Versorgen der Platinen 8, andererseits zum Versorgen der weiteren Platine 801 vorgesehen. Die Platine 801 mit daran angeordneten LEDs ist wie in Figur 12b gezeigt ausgebildet, und bei den Ausführungsformen sind jeweils vier Platinen 8 vorgesehen, wobei der Schnitt nicht durch die Platinen 8 selbst, sondern durch den zwischen den Platinen 8 vorgesehene Zwischenraum erfolgt, wobei die Platinen 8 beispielsweise wie in den Figuren 12a und 12b gezeigt angeordnet sind. Bei sämtlichen in Figur 13 gezeigten Ausführungsbeispielen steht der Lichtleiter 7 mit einem Überkragungsabschnitt horizontal über einen wie erläutert vorgesehenen Vertikalabschnitt der Abdeckung 4 vor. Zumindest innerhalb dieses Überkragungsabschnitts ist an der Oberseite des Lichtleiters 7 ein Reflektor 10 vorgesehen, beispielsweise nach Art einer Reflektorplatte, nach Art einer Beschichtung oder nach Art einer reflektiv wirkenden Strukturierung. Bei dem Ausführungsbeispiel gemäß Figur 13a weist der Lichtleiter ein erstes Lichtleiterelement 71 und ein zweites Lichtleitelement 72 auf, wie dies analog in Figur 12b gezeigt ist, wobei die beiden Lichtleiterelement 71, 72 in dem von der Abdeckung 4 begrenzten Innenraum der Leuchte 1 angeordnet sind. Das erste Lichtleiterelement 71 bildet den Überkragungsabschnitt des Lichtleiters 7 aus und ist an seiner Unterseite von dem ersten vertikalen Abschnitt 41 der Abdeckung 4 verdeckt. Das zweite Lichtleiterelement 72 ist innerhalb der horizontalen Erstreckung des zweiten vertikalen Abschnitts 42 der Abdeckung 4 angeordnet und ragt nicht über dessen horizontale Erstreckung hinaus. In das zweite Lichtleiterelement 72 wird Licht eingekoppelt, das von LEDs imitiert wird, die auf Platinen 8 angeordnet sind, die innerhalb von in dem zweiten Lichtleiterelement 72 vorgesehenen Aussparung angeordnet sind. In das erste Lichtleiterelement 71 wird Licht eingekoppelt, dass von den LEDs imitiert wird, die an der weiteren Platine 801 vorgesehen sind. Diese LEDs sind an der Schmalseite des ersten Lichtleiterelements angeordnet, sodass hierbei eine klassische Kanteneinkoppelung erfolgt. Durch den Geräteträger 6 sind die Lichtquellen der weiteren Platine 801 nach unten abgeschattet, sodass keine unangenehmen Streustrahlung ausgehend von diesen LEDs in den zweiten vertikalen Abschnitt 42 der Abdeckung 4 gelangen kann, was erfindungsgemäß allgemein vorteilhaft ist. Der Geräteträger selbst bildet somit allgemein bevorzugt die in vorteilhaften Ausführungsformen vorgesehene Abschattungseinrichtung aus. Die Ausführungsform gemäß Figur 13b unterscheidet sich von der Ausführungsform gemäß Figur 13a dadurch, dass das erste Lichtleiterelement 71 mit der Abdeckung 4 verbunden ist und selbst einen Teil der Außenseite der Leuchte 1 ausbildet, sodass von dem ersten Lichtleiterelement 71 Licht in die Umgebung direkt von seiner Außenseite abgestrahlt wird, so dass sowohl von der Abdeckung 4 als auch vom Lichtleiter 7 Licht in die Umgebung der Leuchte abgestrahlt wird. Die Ausführungsform gemäß Figur 13c unterscheidet sich von der Ausführungsform gemäß Figur 13a dadurch, dass der Lichtleiter 7 lediglich als einstückiges Bauteil nach Art einer kreisringartigen Scheibe ausgebildet ist, in die Licht von den an der weiteren Platine 801 vorgesehenen Lichtquellen eingekoppelt wird, wie dies zu den Figuren 13a und 13b mit Blick auf das erste Lichtleiterelement 71 erläutert ist. Bei den verschiedenen Ausführungsformen 13a, 13b, 13c ist jeweils analog vorgesehen, dass der Deckel eine umlaufende Seitenwand 202 aufweist, die über den Geräteträger 6 mit dem Träger 5 verbunden ist und die durch einen Verschlussabschnitt 201 oberseitig verschlossen ist. Der Deckel 2 beziehungsweise seine Seitenwand 202 überkragt sowohl die Abdeckung 4 als auch den Lichtleiter 7 zum Gewährleisten eines effektiven Schutzes der beiden.

In den Figuren 14 und 15 sind zwei weitere Ausführungsformen einer erfindungsgemäßen Leuchte stark vereinfacht in schematischen Prinzipdarstellungen dargestellt. In ihrem Grundaufbau entsprechen die Ausführungsformen gemäß den Figuren 14 und 15 der Ausführungsform gemäß Figur 11. Von dieser Ausführungsform unterscheiden sie sich jedoch zum einen durch eine Ausgestaltung des Trägers 5 durch nur ein säulenartiges Trägerelement und durch das Vorsehen eines dritten Lichtleiterelements 73, das Aussparungen aufweist, in denen jeweils eine weitere Platine 802 angeordnet ist. Der Lichtleiter 7 der Ausführungsform gemäß den Figuren 14 und 15 weist somit ein erstes, zweites und drittes Lichtleiterelement 71, 72, 73 auf, wobei eine Einkopplung von Licht in das dritte Lichtleiterelement 73 analog erfolgt, wie dies vorliegend mit Bezug auf das zweite Lichtleiterelement 72 beziehungsweise anhand der Figuren 2-4 mit Bezug auf den Lichtleiter 7 erläutert ist. Die Ausführungsformen gemäß den Figuren 14 und 15 unterscheiden sich durch die Form ihrer jeweiligen Abdeckung 4. Während die Abdeckung 4 gemäß Figur 14 sich über den überwiegenden Anteil ihrer vertikalen Erstreckung nach Art einer zylindrischen Röhre erstreckt, erstreckt sich die Abdeckung 4 der Ausführungsform gemäß Figur 15 über einen überwiegenden Anteil ihrer vertikalen Erstreckung nach Art eines Kegelstumpfs. Bei beiden Ausführungsform weist der Lichtleiter eine horizontale Erstreckung auf, die mehr als 130 % der über ihre vertikale Erstreckung hinweg gemittelten horizontalen Erstreckung der Abdeckung 4 beträgt. Allerdings ist nur bei dem Lichtleiter gemäß Figur 14 vorgesehen, dass dieser einen Überkragungsabschnitt aufweist, mit dem er über einen röhrenartigen vertikalen Abschnitt der Abdeckung 4 horizontal dachartig vorsteht.

### Bezugszeichenliste

- 1: Leuchte
- 2: Deckel
- 3: Befestigungskörper
- 4: Abdeckung
- 5: Träger
- 6: Geräteträger
- 7: Lichtleiter
- 8: Platine
- 9: Optikelement
- 10: Reflektorplatte
- 11: Befestigungsmittel
- 20: Schnittstelle
- 30: Mastaufsatzabschnitt
- 60: Topfboden
- 61: Schraubdom
- 62: Positioniereinrichtung
- 71: erstes Lichtleiterelement
- 72: zweites Lichtleiterelement
- 90: optischer Abschnitt
- 91: Positioniereinrichtung
- 92: Durchführung
- 101: Aussparung
- 102: Durchführung
- 103: Durchführung
- 202: Seitenwand
- 201: Verschlussabschnitt
- 700: Lichtleiter
- 600: Geräteträger
- 601: Geräteträgerabschnitt
- 701: Aussparung
- 702: Durchführung
- 703: Durchführung
- 704: Fixieraussparung
- 800: Platine
- 801: Platine

## Patentansprüche

1. Leuchte (1) umfassend mehrere in einem Betriebszustand der Leuchte (1) zum Emittieren von Licht ausgebildete Lichtquellen und eine lichtdurchlässige Abdeckung (4), die mit ihrer Innenseite einen Innenraum der Leuchte (1) begrenzt und deren Außenseite zum Abstrahlen des von den Lichtquellen emittierten Lichts in eine Umgebung der Leuchte (1) ausgebildet ist, wobei zumindest einige der Lichtquellen einer Gruppe an Lichtquellen angehören, denen jeweils ein Optikelement (9) zugeordnet ist, durch das eine Lichtverteilung vorgegeben ist, mit der das von der dem jeweiligen Optikelement (9) zugeordneten Lichtquelle emittierte Licht von dem Optikelement (9) weg zur Abdeckung (4) hin propagiert,
**dadurch gekennzeichnet, dass**
die Leuchte (1) einen flächigen Lichtleiter (7, 700) umfasst, dessen Lichtleitkörper durch zwei flächige Außenseiten und durch die Außenseiten verbindende Schmalseiten definiert ist, wobei zumindest einige der Lichtquellen dergestalt an einem Lichteinkoppelabschnitt des Lichtleiters (7, 700) angeordnet sind, dass ein Einkoppeln von zumindest einem Teil des von ihnen emittierten Lichts in den Lichtleiter (7, 700) zwischen dessen Außenseiten gewährleistet ist, wobei das in den Lichtleiter (7, 700) eingekoppelte Licht weniger als 50 % des von der Gruppe der Lichtquellen emittierten Lichts beträgt und wobei der Lichtleiter (7, 700) zum Abstrahlen von zumindest 80 % des in ihn eingekoppelten Lichts ausgebildet ist, wobei insbesondere
der Lichteinkoppelabschnitt mit einem Winkel von mindestens 45 ° zu zumindest einer der Außenseiten abgewinkelt ist.

2. Leuchte (1) nach Anspruch 1,
**dadurch gekennzeichnet, dass**
zumindest eine der beiden Außenseiten des Lichtleiters (7, 700) als Lichtabstrahlseite des Lichtleiters (7, 700) ausgebildet ist und die zumindest eine Lichtabstrahlseite zum Abstrahlen des in den Lichtleiter (7, 700) eingekoppelten Lichts zu der Abdeckung (4) hin ausgebildet ist, wobei insbesondere an zumindest einer der beiden Außenseiten eine Lichtauskoppelstruktur vorgesehen ist, wobei insbesondere genau eine der Außenseiten als Lichtabstrahlseite ausgebildet ist und an der anderen der beiden Außenseiten ein flächiger Reflektor angeordnet ist.

3. Leuchte (1) nach einem der vorangehenden Ansprüche,
**dadurch gekennzeichnet, dass**
das in den Lichtleiter (7, 700) eingekoppelte Licht über dessen gesamte, von den Schmalseiten begrenzte flächige Erstreckung entlang den flächigen Außenseiten durch den Lichtleiter (7, 700) hindurch propagiert.

4. Leuchte (1) nach einem der vorangehenden Ansprüche,
**dadurch gekennzeichnet, dass**
die Optikelemente (9) und der Lichtleiter (7, 700) jeweils als separate Bauteile ausgebildet sind, wobei insbesondere die Optikelemente (9) und/oder der Lichtleiter (7, 700) von der Abdeckung (4) beabstandet sind, so dass von den Optikelementen (9) und/oder dem Lichtleiter (7, 700) abgestrahltes Licht durch in dem Innenraum vorgesehenes Medium, insbesondere Luft, propagiert, bevor es zur Abdeckung (4) gelangt, wobei insbesondere die Optikelemente (9) von dem Lichtleiter (7, 700) zumindest durch einen Spalt beabstandet sind, der mit dem in dem Innenraum vorgesehenen Medium gefüllt ist, wobei insbesondere zumindest einige der Optikelemente (9) in einer ihnen jeweils zugeordneten, in dem Lichtleiter (7, 700) vorgesehenen Aussparung (701) angeordnet sind, wobei insbesondere im Betriebszustand der Leuchte (1) ausschließlich von den diesen Optikelementen (9) zugeordneten Lichtquellen emittiertes Licht über den Lichteinkoppelabschnitt in den Lichtleiter (7, 700) gelangt.

5. Leuchte (1) nach Anspruch 4,
**dadurch gekennzeichnet, dass**
die Aussparungen (101, 701) durch zwischen den flächigen Außenseiten verlaufende Schmalseitenabschitte begrenzt sind, wobei die Schmalseitenabschnitte zumindest einen überwiegenden Teil des Lichteinkoppelabschnittes des Lichtleiters (7, 700) ausbilden.

6. Leuchte (1) nach einem der Ansprüche 4 oder 5,
**dadurch gekennzeichnet, dass**
die in den Aussparungen (701) angeordneten Optikelemente (9) jeweils eine Lichtabstrahlfläche aufweisen, von der aus sie mehr als 95 %, insbesondere mehr 99 % des von ihnen abgestrahlten, zuvor von der ihnen zugeordneten Lichtquelle emittierten Lichts abstrahlen, wobei die Lichtabstrahlfläche eines jeden Optikelements (9) so weit von einem jeden an die Aussparung angrenzenden Bereich des Lichtleiters (7, 700) beabstandet ist und das jeweilige Optikelement (9) mit seiner Lichtabstrahlfläche so relativ zur Lichtabstrahlseite des Lichtleiters (7, 700) angeordnet ist, dass mehr als 50 %, insbesondere mehr als 70 %, des von der Lichtabstrahlfläche abgestrahlten Lichts ohne vorheriges Einkoppeln in und Propagieren durch den Lichtleiter (7, 700), insbesondere ohne Interaktion mit dem Lichtleiter, (7, 700) zur Innenseite und/oder zur Außenseite der Abdeckung (4) gelangt.

7. Leuchte nach einem der Ansprüche 4 bis 6,
**dadurch gekennzeichnet, dass**
die in den Aussparungen (101, 701) angeordneten Optikelemente (9) sich jeweils über mindestens 70 %, insbesondere mindestens 80 %, einer Dicke des Lichtleiters (7, 700), mit der er sich zwischen seinen beiden Außenseiten um die Aussparung (101, 701) herum erstreckt, hinweg erstrecken, wobei insbesondere die Optikelemente (9) jeweils über eine der Außenseiten des Lichtleiters (7, 700), insbesondere zumindest über die als Lichtabstrahlseite des Lichtleiters ausgebildete Außenseite, vorstehen, insbesondere um mindestens 10 %, insbesondere mindestens 20 % der Dicke des Lichtleiters (7, 700) vorstehen, und/oder dass die Optikelemente (9) durch Spritzgießverfahren hergestellt sind und/oder der Lichtleiter (7, 700) aus Kunststoff hergestellt ist, insbesondere aus einem Vorkörper, der insbesondere ein mittels Extrusionsverfahrens oder mittels Gießverfahrens hergestellter Körper ist, durch Bearbeitung des Vorkörpers mittels Schneidverfahrens und/oder Oberflächenmodifikation hergestellt ist.

8. Leuchte (1) nach einem der Ansprüche 4 bis 7,
**dadurch gekennzeichnet, dass**
eine Summe der den Optikelementen (9), die jeweils in einer der Aussparungen (101, 701) angeordnet sind, vorgegebenen Lichtverteilungen des von der ihnen zugeordneten Lichtquelle emittierten Lichts eine Gesamtlichtverteilung ergibt, die sich über einen räumlichen Lichtverteilungsabstrahlwinkel hinweg erstreckt, wobei das von dem Lichtleiter (7, 700) abgestrahlte Licht zumindest zum überwiegenden Teil, insbesondere vollständig, innerhalb des Lichtverteilungsabstrahlwinkels vom Lichtleiter (7, 700) weg strahlt, und/oder dass zwischen 2 % und 20 %, insbesondere zwischen 3 % und 15 %, einer Gesamtlichtintensität der Lichtverteilung des von der dem jeweiligen Optikelement (9), das in einer der Aussparungen (101, 701) angeordnet ist, zugeordneten Lichtquelle emittierten Lichts über den Lichteinkoppelabschnitt in den Lichtleiter (7, 700) gelangt, wobei insbesondere mindestens 80 % dieses in den Lichtleiter (7, 700) gelangten Lichts anschließend aus zumindest einer der flächigen Außenseite des Lichtleiters (7, 700) austritt.

9. Leuchte (1) nach einem der vorangehenden Ansprüche,
**dadurch gekennzeichnet, dass**
die Leuchte (1) einen Geräteträger (6) mit einer Montageseite umfasst, wobei die Lichtquellen und die Optikelemente (9) und insbesondere der Lichtleiter (7, 700) an der Montageseite fixiert sind, wobei insbesondere der Lichtleiter (7, 700) zumindest abschnittsweise nach Art einer Platte ausgebildet ist, die mit ihrer flächigen Plattenseite zur Montageseite weisend angeordnet ist, und/oder der Lichtleiter (7, 700) zumindest abschnittsweise nach Art einer Röhre ausgebildet ist, die mit einem offenen Röhrenende zur Montageseite weisend angeordnet ist, wobei insbesondere Reflektor, insbesondere eine Reflektorplatte (10), zwischen der Montageseite und dem Lichtleiter (7, 700) angeordnet ist, wobei insbesondere der Lichtleiter (7, 700) gemeinsam mit den Optikelementen (9) zumindest 70 %, insbesondere zumindest 80 %, insbesondere zumindest 90 % der Montageseite bedeckt, insbesondere über die Montageseite des Geräteträgers (6) seitlich hinaus ragt.

10. Leuchte (1) nach einem der vorangehenden Ansprüche,
**dadurch gekennzeichnet, dass**
das von sämtlichen Lichtquellen der Leuchte (1) emittierte Licht sich in einen ersten und einen zweiten Anteil aufteilt, wobei nur der erste Anteil in den Lichtleiter (7, 700) gelangt und nur nach Propagation durch den Lichtleiter (7, 700) zur Abdeckung (4) gelangt, wohingegen der zweite Anteil ausgehend von den Lichtquellen, die den zweiten Anteil emittieren, ausschließlich außerhalb des Lichtleiters (7, 700) propagiert und unter Durchquerung des Innenraums zur Abdeckung (4) gelangt, wobei die Gesamtlichtintensität des ersten Anteils maximal 100 %, insbesondere maximal 70 %, insbesondere maximal 50 % der Gesamtlichtintensität des zweiten Anteils beträgt und/oder der erste Anteil eine geringere Veränderung seiner Intensität in Abhängigkeit von dem Abstrahlwinkel aufweist als der zweite Anteil, wobei insbesondere ausschließlich die Gruppe an Lichtquellen den zweiten Anteil emittiert, wobei insbesondere ausschließlich die Gruppe an Lichtquellen den ersten Anteil emittiert.

11. Leuchte (1) nach einem der vorangehenden Ansprüche,
**dadurch gekennzeichnet, dass**
das in den Lichtleiter (7, 700) eingekoppelte Licht von zumindest einigen der Lichtquellen der Gruppe emittiert ist und die diesen Lichtquellen der Gruppe zugeordneten Optikelemente (9) das von den ihnen zugeordneten Lichtquellen emittierte Licht zumindest überwiegend ausgehend von nur solchen Oberflächenabschnitten zur Abdeckung (4) hin abstrahlen, die zwischen dem Lichtleiter (7, 700) und der Abdeckung (4) angeordnet sind, und/oder dass sämtliche Optikelemente (9) das von den ihnen zugeordneten Lichtquellen emittierte Licht zumindest überwiegend ausgehend von nur solchen Oberflächenabschnitten zur Abdeckung (4) hin abstrahlen, die zwischen dem Lichtleiter (7, 700) und der Abdeckung (4) angeordnet sind.

12. Leuchte (1) nach einem der vorangehenden Ansprüche,
**dadurch gekennzeichnet, dass**
der Geräteträger (6) nach Art einer Topfform ausgebildet ist und einen Topfboden (60) und eine um den Topfboden (60) umlaufende Topfwand aufweist, wobei die Lichtquellen an dem Topfboden (60) angeordnet sind, wobei insbesondere innerhalb der Topfform eine elein Betriebsgerät angeordnet ist, das zum Versorgen der Lichtquellen ausgebildet ist.

13. Leuchte (1) nach einem der vorangehenden Ansprüche,
**dadurch gekennzeichnet, dass**
die Leuchte (1) einen Deckel (2) aufweist, der die Topfform verschließt, wobei die Abdeckung (4) zumindest von der Montageseite oder dem Deckel (2) aus bis zu einem von der Montageseite in einer Vertikalrichtung beabstandeten Befestigungskörper (3) der Leuchte (1) röhrenartig verläuft und dabei den Innenraum horizontal umlaufend umschließt, wobei insbesondere der Befestigungskörper (3) einen hohlzylindrischen Mastaufsatzabschnitt (30) aufweist.

14. Leuchte (1) nach einem der vorangehenden Ansprüche,
**dadurch gekennzeichnet, dass**
die Leuchte (1) eine weitere Gruppe an Lichtquellen aufweist, die in einer in dem Lichtleiter (7, 700) vorgesehenen Aufnahme angeordnet sind, die den Lichteinkoppelabschnitt des Lichtleiters (7, 700) ausbildet, wobei insbesondere die weitere Gruppe an Lichtquellen auf einem Trägerring angeordnet ist, der horizontal um eine Ringachse umläuft, wobei insbesondere die Lichtquellen der weiteren Gruppe dergestalt angeordnet sind, dass sie Licht von dem Trägerring vertikal weg strahlen.

15. Leuchte (1) nach einem der vorangehenden Ansprüche,
**dadurch gekennzeichnet, dass**
die Abdeckung (4) eine Form nach Art einer Röhre mit einer vertikalen Röhrenlänge und einem horizontalen lichten Querschnitt aufweist, der einen maximalen horizontalen Durchmesser aufweist, wobei der Lichtleiter (7, 700) innerhalb der Röhre angeordnet ist und einen horizontalen Querschnitt mit einem maximalen Durchmesser aufweist, der mindestens 50 %, insbesondere mindestens 70 %, insbesondere mindestens 80 % des maximalen Durchmessers der Röhre beträgt, den die Röhre auf Höhe des Lichtleiters (7, 700) oder an ihrem zum Lichtleiter (7, 700) gewandten Röhrenende aufweist, und/oder dass der Lichtleiter (7, 700) eine röhrenartige Form ausbildet, die innerhalb der Abdeckung (4) über mindestens 20 %, insbesondere mindestens 30 %, insbesondere mindestens 50 % der Röhrenlänge der Abdeckung (4) verläuft oder die die Abdeckung (4) ausbildet, wobei insbesondere zumindest einige der Lichtquellen der Gruppe an Lichtquellen horizontal zwischen der von dem Lichtleiter (7, 700) ausgebildeten röhrenartigen Form und der Abdeckung (4) angeordnet sind oder sämtliche Lichtquellen horizontal innerhalb der von dem Lichtleiter (7, 700) ausgebildeten röhrenartigen Form angeordnet sind.

16. Leuchte (1) nach einem der vorangehenden Ansprüche,
**dadurch gekennzeichnet, dass**
der Lichtleiter (7, 700) mehrteilig ausgebildet ist und ein erstes und ein zweites Lichtleiterelement (71, 72) aufweist, wobei insbesondere das erste Lichtleiterelement einen plattenartigen Abschnitt aufweist und das zweite Lichtleiterelement einen röhrenartigen Abschnitt aufweist.

17. Leuchte (1) nach Anspruch 16,
**dadurch gekennzeichnet, dass**
zumindest einige der Lichtleiterelemente(71, 72) mit ihren horizontalen Enden horizontal und/oder mit ihren vertikalen Mitten vertikal, insbesondere um mindestens 20 %, insbesondere um mindestens 30 %, einer vertikalen Gesamterstreckungslänge der Abdeckung (4), voneinander beabstandet sind und/oder dass jedem der Lichtleiterelemente (71, 72) eine jeweils andere Teilmenge der Lichtquellen zugeordnet ist, wobei insbesondere jede Teilmenge der Lichtquellen nur zum Einkoppeln in das ihnen jeweils zugeordnete Lichtleiterelement (71, 72) ausgebildet und hierzu an dessen Lichteinkoppelabschnitt angeordnet ist.

18. Leuchte (1) nach einem der vorangehenden Ansprüche,
**dadurch gekennzeichnet, dass**
der Lichtleiter (7, 700) eine horizontale Erstreckung aufweist, die mindestens 130 %, insbesondere mindestens 150 %, insbesondere mindestens 200 % einer über ihre vertikale Erstreckung hinweg gemittelte horizontale Erstreckung der Abdeckung (4) beträgt.

19. Leuchte (1) nach einem der vorangehenden Ansprüche,
**dadurch gekennzeichnet, dass**
die Abdeckung (4) einen horizontalen Querschnitt senkrecht zu einer vertikalen Mittenachse der Leuchte (1) aufweist, der durch ein um die Mittenachse umlaufendes horizontales Ende der Abdeckung (4) begrenzt ist und der sich insbesondere entlang ihrer vertikalen Erstreckung verändert, wobei der Lichtleiter (7, 700) einen Überkragungsabschnitt aufweist und sich die Abdeckung (4) mit einem Vertikalabschnitt, der mindestens 80 %, insbesondere mindestens 90 %, ihrer vertikalen Gesamterstreckungslänge ausbildet, an nur einer vertikalen Seite des Überkragungsabschnitts erstreckt und der Lichtleiter (7, 700) um eine vertikale Mittenachse der Leuchte (1) umlaufend horizontal über den Vertikalabschnitt der Abdeckung vorsteht, wobei insbesondere der Vertikalabschnitt nach Art einer Röhre, insbesondere zylindrischen Röhre, ausgebildet ist und der Überkragungsabschnitt vordachartig horizontal über die Röhre vorsteht, insbesondere um mindestens 30 %, insbesondere mindestens 50 %, eines mittleren Durchmessers des Vertikalabschnitts.

20. Leuchte (1) nach einem der vorangehenden Ansprüche,
**dadurch gekennzeichnet, dass**
die Außenseite die Abdeckung (4) innerhalb eines vertikalen Endbereichs der Abdeckung (4), mit dem sie an den Befestigungskörper vertikal angrenzt, zur Vertikalrichtung (Z) abgewinkelt verläuft zum Abstrahlen von Licht nach unten, insbesondere um mindesten 30°, insbesondere um mindestens 45°, insbesondere um mindestens 60°, insbesondere um 90° zur Vertikalrichtung (Z) abgewinkelt verläuft, wobei insbesondere ein Lichtleiterelement des Lichtleiters (7, 700) innerhalb des vertikalen Endbereichs oder an den vertikalen Endbereich angrenzend angeordnet ist.

21. Leuchte (1) nach einem der vorangehenden Ansprüche,
**dadurch gekennzeichnet, dass**
die Leuchte (1) zumindest einen ersten und einen zweiten und insbesondere einen dritten Lichtabstrahlbereich aufweist, wobei die Lichtabstrahlebereiche vertikal untereinander angeordnet sind, wobei der erste Lichtabstrahlbereich oberhalb des zweiten Lichtabstrahlbereichs angeordnet ist, horizontal über den zweiten Lichtabstrahlbereich vorsteht und zum Abstrahlen von Licht mit einer ersten gemittelten Abstrahlrichtung ausgebildet ist, wobei der zweite Lichtabstrahlbereich ausschließlich unterhalb des ersten Lichtabstrahlbereichs angeordnet ist und zum Abstrahlen von Licht mit einer zweiten gemittelten Abstrahlrichtung ausgebildet ist, wobei insbesondere der dritte Lichtabstrahlbereich ausschließlich unterhalb des zweiten Lichtabstrahlbereichs angeordnet ist und zum Abstrahlen von Licht mit einer dritten gemittelten Abstrahlrichtung ausgebildet ist, wobei insbesondere i) die erste und insbesondere die dritte gemittelte Abstrahlrichtung einen kleineren Winkel zur Vertikalrichtung (Z) aufweist als die zweite gemittelte Abstrahlrichtung, und/oder dass
ii) zumindest ein überwiegender Anteil des im Betriebszustand der Leuchte (1) von dem ersten und/oder dem dritten Lichtabstrahlbereich in die Umgebung der Leuchte (1) abgestrahlten Lichts von dem Lichtleiter (7, 700) abgestrahltes Licht ist, und/oder dass
iii) der zweite Lichtabstrahlbereich eine vertikale Erstreckungslänge aufweist, die ein Vielfaches, insbesondere zumindest das Dreifache, insbesondere zumindest das Fünffache, einer vertikalen Erstreckungslänge des ersten und insbesondere des dritten Lichtabstrahlbereichs beträgt.

22. Set zur Realisierung einer Leuchte (1) nach einem der Ansprüche 5 bis 21,
**dadurch gekennzeichnet, dass**
das Set mehrere unterschiedliche Lichtleiter (7, 700) aufweist, die sich in ihren horizontalen Außenabmessungen unterscheiden, sowie mehrere identische Optikelemente (9), wobei die Leuchte (1) durch Kombination von jedem einzelnen der unterschiedlichen Lichtleiter (7, 700) jeweils mit den identisch ausgebildeten Optikelementen (9) realisierbar ist, und/oder dass das Set mehrere unterschiedliche Optikelemente (9) aufweist, die sich in ihren optisch lenkenden Eigenschaften unterscheiden, sowie einen Lichtleiter (7, 700), wobei die Leuchte (1) durch Kombination von jedem einzelnen der unterschiedlichen Optikelemente (9) jeweils mit dem einen Lichtleiter (7, 700) realisierbar ist.

23. Verfahren zum Beleuchten einer Umgebung mit einer Leuchte (1), die einen Lichtleiter (7, 700) umfasst, wobei von einer Abdeckung (4) der Leuchte (1) aus Licht in die Umgebung abgestrahlt wird, das von Lichtquellen der Leuchte (1) emittiert wird, wobei ein überwiegender Teil des Lichts von den Lichtquellen aus durch ein diesen jeweils zugeordnetes Optikelement (9) hindurch gestrahlt wird und anschließend durch die Abdeckung (4) abgestrahlt wird, ohne dass es zuvor innerhalb des Lichtleiters (7, 700) propagiert ist, wobei der übrige Teil des Lichts erst dann durch die Abdeckung (4) hindurch abgestrahlt wird, nachdem es durch den Lichtleiter (7, 700) hindurch propagiert ist.
